(19) Europäisches Patentamt / European Patent Office / Office européen des brevets

(11) **EP 4 361 684 B1**

(12) **FASCICULE DE BREVET EUROPEEN**

(45) Date de publication et mention de la délivrance du brevet:
**06.05.2026 Bulletin 2026/19**

(21) Numéro de dépôt: **24154554.0**

(22) Date de dépôt: **13.07.2022**

(51) Classification Internationale des Brevets (IPC):
*G01T 1/164* (2006.01)     *G01T 1/29* (2006.01)

(52) Classification Coopérative des Brevets (CPC):
**G01T 1/1648; G01T 1/2928**

(54) **PROCÉDÉ DE FORMATION D'UNE IMAGE GAMMA PRENANT EN COMPTE UNE NON UNIFORMITÉ SPATIALE DE LA SENSIBILITÉ**

VERFAHREN ZUR ERZEUGUNG EINES GAMMABILDES UNTER BERÜCKSICHTIGUNG EINER RÄUMLICHEN UNGLEICHFÖRMIGKEIT DER EMPFINDLICHKEIT

METHOD FOR FORMING GAMMA IMAGE CONSIDERING SPATIAL NON-UNIFORMITY OF SENSITIVITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.07.2021 FR 2107628**

(43) Date de publication de la demande:
**01.05.2024 Bulletin 2024/18**

(62) Numéro(s) de document de la (des) demande(s) initiale(s) en application de l'article 76 CBE:
**22184628.0 / 4 119 989**

(73) Titulaire: **Commissariat à l'Energie Atomique et aux Energies Alternatives**
**75015 Paris (FR)**

(72) Inventeur: **MONTEMONT, Guillaume**
**38054 GRENOBLE cedex 09 (FR)**

(74) Mandataire: **INNOV-GROUP**
**209 Avenue Berthelot**
**69007 Lyon (FR)**

(56) Documents cités:
**US-A1- 2011 155 918     US-A1- 2015 260 854**

• **YUEFENG ZHU ET AL: "Sub-Pixel Position Sensing for Pixelated, 3-D Position Sensitive, Wide Band-Gap, Semiconductor, Gamma-Ray Detectors", IEEE TRANSACTIONS ON NUCLEAR SCIENCE, IEEE, USA, vol. 58, no. 3, 1 June 2011 (2011-06-01), pages 1400 - 1409, XP011355585, ISSN: 0018-9499, DOI: 10.1109/TNS.2011.2132738**

**Description**

## DOMAINE TECHNIQUE

Le domaine technique de l'invention est l'imagerie X ou gamma, et plus particulièrement la reconstruction de la position de sources irradiantes à l'aide d'une image acquise par une gamma caméra.

## ART ANTERIEUR

Les gamma caméras sont des dispositifs permettant de former une image pour établir une cartographie de sources irradiantes dans un environnement donné. Une première application est la visualisation d'une source d'irradiation dans un organisme, à des fins de diagnostic médical. Une autre application est la localisation d'une source irradiante dans une installation, et en particulier dans une installation nucléaire.

Le recours à des gamma caméras dans le domaine médical est relativement ancien. Dans le nucléaire, ce type de dispositif a été développé dans les années 1990, et tend à se répandre dans les installations nucléaires, à des fins de caractérisation radiologique. L'objectif est d'identifier les principales sources irradiantes présentes dans une installation. En effet, les sources d'irradiation ne sont pas réparties de façon homogène. Elles sont souvent concentrées localement, sous la forme de "points chauds", terme usuel dans le domaine de la radioprotection. Une gamma caméra présente l'intérêt d'effectuer une localisation, à distance, de ces points chauds.

Certaines gamma caméras sont constituées d'une matrice bidimensionnelle de pixels, reliée à un matériau détecteur. Le matériau détecteur est généralement un matériau semi-conducteur, par exemple CdTe ou CdZnTe. Sous l'effet d'une interaction d'un rayonnement ionisant dans le matériau détecteur, un ou plusieurs pixels génèrent une impulsion électrique, dont l'amplitude est corrélée avec l'énergie libérée par le rayonnement lors de l'interaction. Chaque pixel est raccordé à un circuit électronique de traitement des impulsions.

Chaque pixel est formé d'une électrode, qui fait usuellement fonction d'anode. Lorsqu'un rayonnement incident interagit dans le matériau détecteur, des électrons sont libérés dans le matériau détecteur. Les électrons sont collectés par une anode. Cette dernière génère une impulsion dont l'amplitude dépend du nombre d'électrons collectés par l'anode, ce nombre étant généralement proportionnel à une énergie perdue par le rayonnement ionisant dans le matériau détecteur.

Chaque pixel s'étend sur quelques millimètres de côté. Pour des raisons de compacité, la matrice de pixels comporte généralement cent, ou quelques centaines, de pixels par ligne et par colonne. Afin d'obtenir une résolution spatiale suffisante, chaque pixel peut-être « sub-pixellisé », ou « sous-pixellisé » c'est à dire subdivisé en pixels virtuels. Des procédés ont déjà été développés, permettant d'associer, à chaque interaction, non pas un pixel, mais un pixel virtuel. De tels procédés exploitent le fait que lorsqu'une interaction se produit dans le matériau détecteur, les porteurs de charge, migrant vers la matrice d'anodes, génèrent un signal détectable par plusieurs pixels adjacents. Ainsi, ces procédés sont basés sur une combinaison des signaux détectés par plusieurs pixels adjacents. Un tel procédé est par exemple décrit dans les publications Warburton W.K, « An approach to sub-pixel spatial resolution in room temperature X-ray detector arrays with good energy resolution » ainsi que dans Montemont et al. « Studying spatial resolution of CZT detectors using sub-pixel positioning for SPECT », IEEE transactions on nuclear science, Vol. 61, N°5, octobre 2014 ou encore dans le brevet US9322937B2. En utilisant ces procédés, la taille des pixels virtuels peut atteindre par exemple 0.5 mm * 0.5 mm, ou 0.1 mm par 0.1 mm.

La publication Yuefeng Zhu et al « Sub-pixel position sensing for Pixelated 3-D position sensitive, wide band-gap, semiconductor,r gamma ray detector" décrit un procédé de sous-pixelisation d'une gamma caméra de type Compton.

Cependant, l'inventeur a constaté que l'application de tels procédés pose des problèmes de non uniformité de la réponse de la gamma caméra. Lorsque la matrice de pixel est irradiée par un flux uniforme de photons, la sous-pixellisation en pixels virtuels entraîne une réponse spatialement non uniforme de la gamma caméra : le nombre d'interactions associées à des pixels virtuels « centraux », situés au centre d'un pixel, est surestimé, au détriment du nombre d'interactions associés à des pixels virtuels « périphériques », situés à la périphérie d'un pixel. Une telle non uniformité peut être préjudiciable lorsque l'image formée par la gamma caméra fait l'objet de traitements de façon à reconstruire une image des sources irradiantes dans le champ d'observation. C'est par exemple le cas des gamma caméras utilisant un collimateur de type masque codé. Des non uniformités peuvent générer des artéfacts lors de la reconstruction de la cartographie montrant la position des sources irradiantes.

Il existe d'autres causes de non uniformité de la réponse d'une gamma caméra. Dans les installations nucléaires, des sources irradiantes, dites « hors champ», sont situées en dehors ou en limite du champ d'observation. De telles sources irradiantes génèrent une irradiation parasite pouvant impacter l'image formée par la gamma caméra. Des gamma caméras comportent un collimateur, définissant le champ d'observation. Lorsque le collimateur est de type masque codé, l'image formée par la gamma caméra subit une reconstruction pour tenir compte de la présence du masque codé. Des sources irradiantes disposées à la limite du champ d'observation peuvent générer, lors de la reconstruction, des artéfacts. Lorsque le collimateur est un collimateur à sténopé, des sources fortement irradiantes situées en dehors du champ

EP 4 361 684 B1

d'observation peuvent produire un voile non homogène affectant l'image acquise par la gamma caméra.

Une autre cause affectant la non uniformité de la gamma caméra est la présence de défauts dans le matériau détecteur, modifiant localement la sensibilité de détection.

L'invention décrite ci-après adresse ce problème, et permet de réduire les non-uniformités spatiales d'une gamma caméra.

## EXPOSE DE L'INVENTION

Un premier objet de l'invention est un procédé de détermination d'une fonction de sensibilité spatiale d'une gamma caméra selon la revendication 1,

Selon un premier mode de réalisation :

- les pixels sont répartis selon des lignes et des colonnes sur la surface de détection ;
- chaque groupe de pixels comporte des pixels appartenant à une même ligne ou à une même colonne ;
- l'étape e) comporte les sous-étapes suivantes :

  - e-i) formation d'un premier vecteur, comportant des premiers termes, chaque premier terme étant associé à une colonne de pixels, chaque premier terme comportant une somme de la quantité d'interactions positionnées dans chaque pixel de la colonne ;
  - e-2) formation d'un deuxième vecteur, comportant des deuxièmes termes, chaque deuxième terme étant associé à une ligne de pixels, chaque deuxième terme comportant une somme de la quantité d'interactions positionnées dans chaque pixel de la ligne;

- l'étape f) comporte les sous-étapes suivantes :

  - f-1) pour chaque pixel virtuel, calcul d'un produit d'un premier terme, associé à la colonne du pixel, par un deuxième terme, associé à la ligne du pixel;
  - f-2) détermination du poids assigné au pixel en fonction du produit calculé lors de la sous-étape f-1).

La sous-étape f-2) peut comporter :

- calcul d'une valeur moyenne des produits respectivement calculés, lors de la sous-étape f-1), pour un ensemble de pixels ;
- pour chaque pixel, normalisation du produit résultant de la sous-étape f-1) par la valeur moyenne.

- .

Quel que soit le mode de réalisation, le procédé peut comporter :

- g) élaboration d'une matrice de sensibilité, chaque point de la matrice de sensibilité correspondant à un pixel virtuel de la gamma caméra, la valeur de la matrice de sensibilité en chaque point correspondant au poids assigné audit pixel.

La gamma caméra peut comporter une unité de traitement, configurée pour traiter les interactions mémorisées dans la mémoire. Le procédé comporte une étape h) de reconstruction d'une distribution spatiale des sources irradiantes, dans le champ d'observation, à partir des interactions mémorisées lors de l'étape c) et des poids assignés à chaque pixel lors de l'étape f). L'unité de traitement peut effectuer une normalisation d'un nombre d'interactions détectées par chaque pixel virtuel par le poids affecté audit pixel.

De préférence,

- chaque pixel est relié à une unité de spectrométrie, l'unité de spectrométrie étant configurée pour classer chaque signal de détection dans une bande d'énergie parmi plusieurs bandes d'énergies ;
- lors de l'étape b), chaque interaction positionnée dans un pixel est associée à une bande d'énergie détectée ;
- l'étape h) comporte :

  - une prise en compte d'au moins isotope, l'isotope émettant des photons dans au moins une énergie d'émission ;
  - une reconstruction d'une distribution spatiale de sources irradiantes comportant l'isotope à partir des interactions positionnées lors de l'étape b).

L'étape h) peut comporter :

3

- une prise en compte d'une fonction de réponse spectrale de chaque pixel, la fonction de réponse spectrale représentant une probabilité de détection, dans différentes bandes d'énergie, de chaque photon émis par l'isotope et détecté dans le pixel;
- une prise en compte d'une fonction de réponse spatiale, la fonction de réponse spatiale représentant une probabilité de détection, dans différents pixels, d'un photon émis à partir d'un point du champ d'observation.

Selon une possibilité, la gamma caméra comporte un collimateur définissant le champ d'observation, en particulier un collimateur à masque codé.

Un deuxième objet de l'invention est une gamma caméra, destinée à détecter une présence de sources irradiantes dans un champ d'observation, la gamma caméra comportant :

- un matériau détecteur;
- des pixels, répartis sur une surface de détection du matériau détecteur, chaque pixel étant configuré pour former un signal de détection sous l'effet d'une détection d'une interaction d'un photon ionisant dans le matériau détecteur ;
- une mémoire, configurée pour mémoriser une quantité d'interactions détectées au cours d'une période d'acquisition et respectivement affectées dans chaque pixel ;
- une unité de traitement, configurée pour traiter les interactions mémorisées dans la mémoire, l'unité de traitement étant configurée pour mettre en œuvre les étapes d) f) d'un procédé selon le premier objet de l'invention à partir des interactions détectées.

L'unité de traitement est configurée pour mettre en œuvre les étapes d) à f) de la variante du premier mode de réalisation précédemment décrite en lien avec le premier objet de l'invention.

Un troisième objet de l'invention est un procédé de reconstruction d'une distribution spatiale de sources irradiantes dans le champ d'observation d'une gamma caméra selon le deuxième objet de l'invention, le procédé comportant les étapes suivantes:

- i) acquisition de signaux de détection par les pixels de la gamma caméra durant une période d'acquisition, chaque signal de détection étant associé à une interaction détectée;
- ii) en fonction des signaux de détection, affectation, d'une position de chaque interaction détectée, durant la période d'acquisition, la position correspondant à un pixel I;
- iii) mémorisation, par la mémoire, d'un nombre d'interactions détectées et affectées dans chaque pixel ;

le procédé étant caractérisé en ce qu'il comporte :

- iv) prise en compte de poids, respectivement assignés à chaque pixel I, chaque poids étant déterminé en mettant en œuvre les étapes a) à f) du procédé selon le premier objet de l'invention, l'étape a) étant effectuée en exposant la gamma caméra à un champ d'observation identique ou différent du champ d'observation auquel la gamma caméra est exposée lors de l'étape i) ;
- v) reconstruction de la distribution spatiale des sources irradiantes, dans le champ d'observation, à partir des interactions mémorisées lors de l'étape iii) et des poids assignés à chaque pixel lors de l'étape iv).

Selon un mode de réalisation :

- lors de l'étape i), le champ d'observation est identique au champ d'observation de la gamma caméra lors de l'étape a) ;
- l'étape ii) est confondue avec l'étape b) ;
- l'étape iii) est confondue avec l'étape c).

Selon un mode de réalisation :

- lors de l'étape i), le champ d'observation est différent du champ d'observation de la gamma caméra lors de l'étape a) ;
- l'étape iv) est mise en œuvre en prenant en compte des poids assignés à chaque pixel, les poids ayant été établis au cours d'une mise en œuvre des étapes a) à f), préalablement ou postérieurement à l'étape i).

L'invention sera mieux comprise à la lecture de l'exposé des exemples de réalisation présentés, dans la suite de la description, en lien avec les figures listées ci-dessous.

## FIGURES

La figure 1A schématise les principaux composants d'une gamma caméra permettant une mise en œuvre de l'invention.

La figure 1B montre une segmentation de pixels en pixels virtuels (ou sous-pixels).

La figure 2A montre une distribution de probabilité d'une position estimée, par l'unité de sous-pixellisation de la gamma caméra, en fonction de la position réelle d'une interaction, la position étant définie parallèlement à la surface de détection.

La figure 2B illustre une non uniformité de la fonction spatiale de sensibilité de la gamma caméra.

Les figures 2C et 2D représentent un nombre d'interactions affectées à différents pixels virtuels, ces derniers étant définis à l'intérieur de pixels délimités par des lignes ou des colonnes en traits pleins. Les figures 2C et 2D illustrent respectivement les positions réelles des interactions et les positions des interactions résultant de l'unité de sous-pixellisation.

La figure 2E montre un exemple d'image gamma acquise par une gamma caméra telle que schématisée sur la figure 1A, la fonction spatiale de sensibilité étant non uniforme. Le niveau de gris de chaque pixel virtuel correspond à un nombre d'interactions détectées durant une période d'acquisition.

La figure 3A schématise les principales étapes d'un procédé de détermination de la fonction spatiale de sensibilité de différents pixels virtuels d'une gamma caméra (étapes 100 à 120), ainsi que l'étape de reconstruction d'une image objet, montrant une distribution spatiale de sources irradiantes dans le champ d'observation (étape 130).

La figure 3B illustre des composants de la gamma caméra décrite en lien avec la figure 1A, ainsi que des fonctions de réponses, spatiales ou spectrales, associés à ces composants.

Les figures 4A à 4D illustrent un premier mode de réalisation de l'invention.

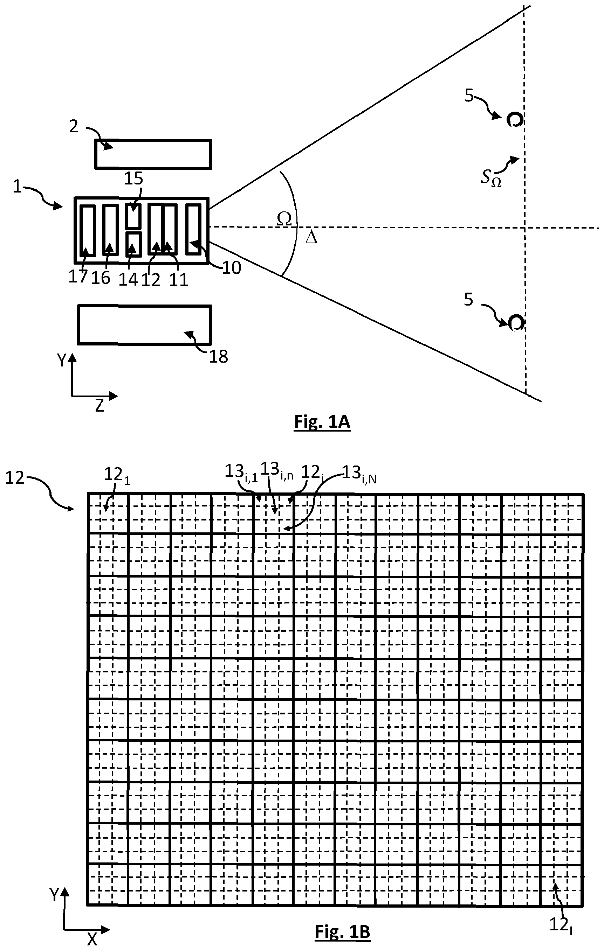

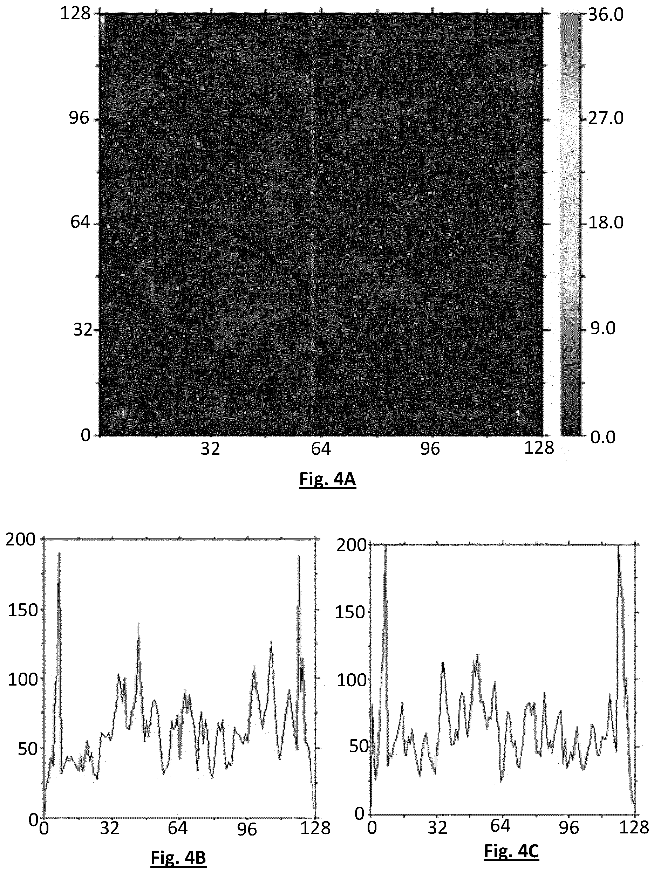

La figure 4A montre un exemple d'image gamma acquise par la gamma caméra décrite en lien avec la figure 1A.

Les figures 4B et 4C schématisent respectivement les termes d'un premier vecteur et d'un deuxième vecteur permettant la détermination de la fonction de sensibilité spatiale de la gamma caméra

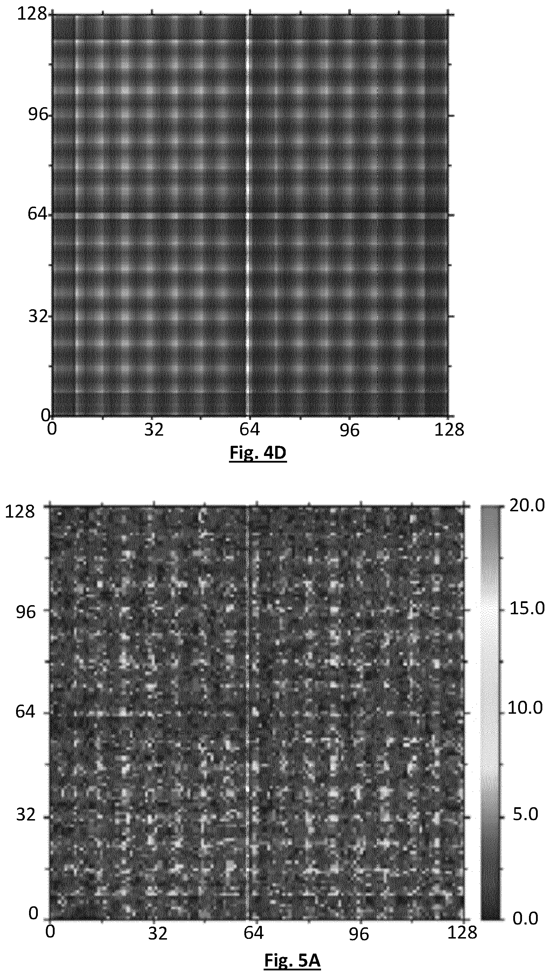

La figure 4D est une représentation, sous forme matricielle, d'une fonction de sensibilité spatiale de la gamma caméra obtenue selon le premier mode de réalisation.

Les figures 5A à 5C illustrent un deuxième mode de réalisation de l'invention.

La figure 5A montre un exemple d'image gamma acquises dans des conditions de terrain, avec une forte contribution de rayonnement diffusé.

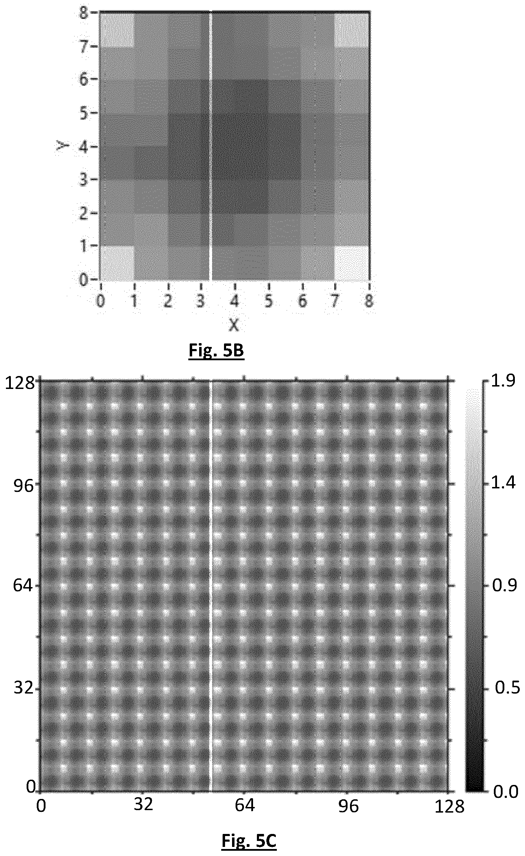

La figure 5B représente une image moyenne, dans laquelle la valeur de chaque point correspond à une moyenne d'une quantité d'interactions détectées par des pixels virtuels du même rang.

La figure 5C est une représentation, sous forme matricielle, d'une fonction de sensibilité spatiale de la gamma caméra obtenue selon le deuxième mode de réalisation.

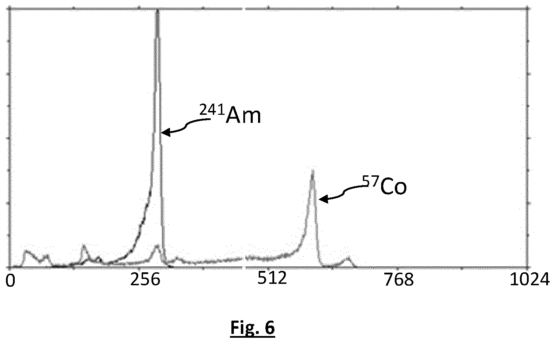

La figure 6 montre une fonction de réponse spectrale d'un pixel de la gamma caméra, pour deux isotopes différents. L'axe des abscisses correspond à un canal d'énergie et l'axe des ordonnées représente une probabilité de détection dans le canal d'énergie.

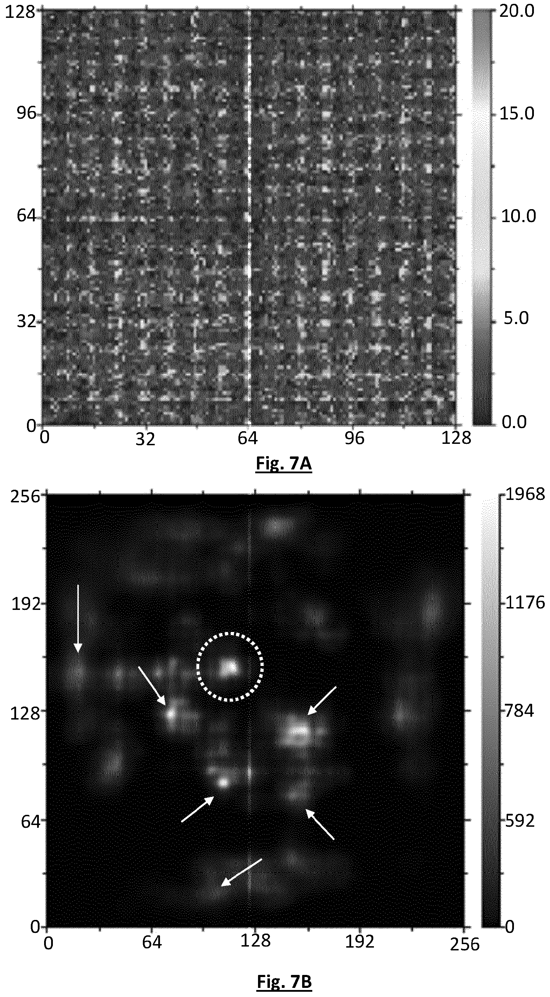

Les figures 7A et 7B représentent respectivement une image gamma acquise par une gamma caméra et une image objet reconstruite à partir de l'image gamma, sans mise en œuvre de l'invention.

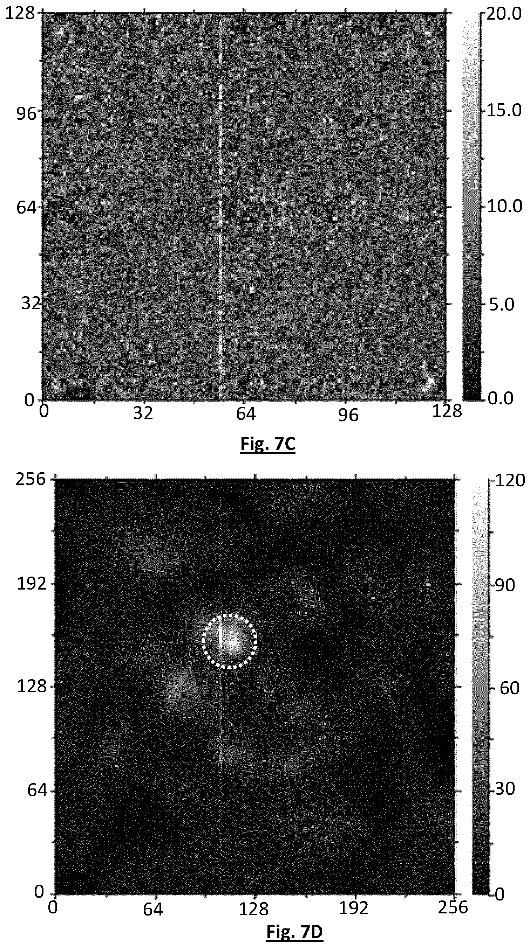

La figure 7C montre l'image gamma de la figure 7A après application d'une fonction de sensibilité spatiale, cette dernière étant déterminée selon un premier mode de réalisation de l'invention.

La figure 7D représente respectivement une image objet reconstruite à partir de l'image gamma représentée sur la figure 7C.

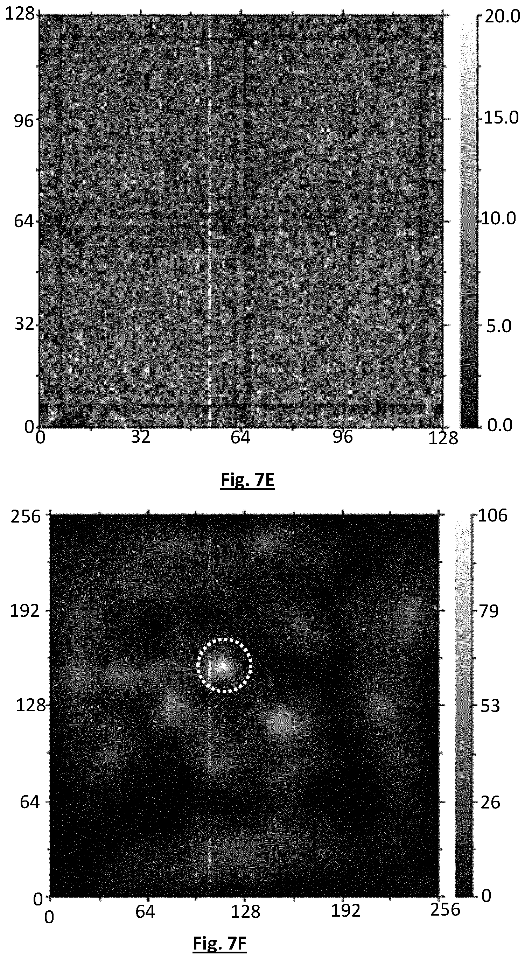

La figure 7E montre l'image gamma de la figure 7A après application d'une fonction de sensibilité spatiale, cette dernière étant déterminée selon un deuxième mode de réalisation de l'invention.

La figure 7F représente respectivement une image objet reconstruite à partir de l'image gamma représentée sur la figure 7E.

## EXPOSE DE MODES DE REALISATION PARTICULIERS

La figure 1A représente une gamma caméra 1, permettant une mise en œuvre de l'invention. La gamma caméra 1 est configurée pour détecter des photons ionisants, de type X ou gamma, dont l'énergie est généralement comprise entre 10 keV et 10 MeV, dans un champ d'observation $\Omega$. Le champ d'observation $\Omega$ s'étend autour d'un axe central $\Delta$. La gamma caméra 1 peut être couplée à une caméra visible, permettant de former une image visible du champ d'observation. Le terme gamma caméra correspond à un imageur présentant un champ d'observation et configuré pour former une image objet $O$ permettant une localisation de sources d'irradiation dans le champ d'observation $\Omega$.

La gamma caméra 1 comporte un matériau détecteur 11, usuellement un matériau semi-conducteur permettant la création de porteurs de charge (paires électrons/trous) lors d'une interaction avec un rayonnement X ou gamma. Il peut par exemple s'agir de CdTe ou CdZnTe. D'une façon générale, le matériau détecteur est propice à interagir avec des photons ionisants, de manière à générer des porteurs de charges. Le matériau détecteur est de préférence un matériau semi-conducteur. De façon alternative, il peut s'agir d'un matériau scintillateur couplé à un photodétecteur.

La gamma caméra 1 comporte des pixels $12_1...12_i...12_I$, répartis selon une surface de détection. Les pixels sont représentés sur la figure 1B. L'indice i représente un rang de chaque pixel $12_i$. $I$ est le nombre de pixels. Généralement, les pixels $12_i$ sont coplanaires et répartis selon une matrice bidimensionnelle, de préférence régulière. La matrice peut par exemple comporter quelques dizaines voire centaines de pixels. $N_{xi}$ correspond au nombre de pixels selon l'axe X et $N_{Yi}$ correspond au nombre de pixels selon l'axe Y. Chaque pixel $12_i$ est un détecteur de rayonnement élémentaire. Dans l'exemple décrit, chaque pixel est une anode, dont la polarisation permet de collecter des électrons produits lors d'une interaction survenant dans le matériau détecteur.

La surface de chaque pixel $12_i$ peut être relativement importante, de l'ordre de quelques $mm^2$. Lorsqu'un photon ionisant interagit dans le matériau détecteur 11, des porteurs de charge, par exemple des électrons, migrent vers un ou plusieurs pixels, ces derniers étant des pixels touchés : chaque pixel touché est un pixel qui collecte des porteurs de charge. Une interaction peut donner lieu à un ou plusieurs pixels touchés. Comme décrit dans l'art antérieur, lors de leur migration vers un pixel touché, les porteurs de charges génèrent un signal, usuellement désigné signal induit, sur les pixels adjacents du ou des pixels touchés.

D'une façon générale, chaque interaction donne lieu à la formation d'un signal de détection par au moins un pixel, et le plus souvent plusieurs pixels. Le signal de détection peut être un signal résultant de la collecte de porteurs de charge par le pixel $12_i$ ou un signal induit par la migration de porteurs de charge dans le matériau détecteur 11. Afin d'améliorer la résolution spatiale de l'image gamma, la gamma caméra comporte, dans un mode de réalisation non revendiqué, une unité de sous-pixellisation 14, programmée pour attribuer une position (x,y) de chaque interaction détectée, parallèlement à la surface de détection 12, à partir de signaux de détection formés par plusieurs pixels $12_i$ suite à chaque interaction. Dans la suite de la description, la position d'une interaction correspond à une position de l'interaction parallèlement à la surface de détection définie par les pixels $12_i$.

La gamma caméra peut comporter un collimateur 10 pour délimiter le champ d'observation $\Omega$ susceptible de comporter des sources irradiantes 5. Les pixels sont exposés à une irradiation, provenant des sources irradiantes du champ d'observation, durant une période d'acquisition. Au cours de la période d'acquisition, les pixels acquièrent des signaux de détection résultant de d'interactions de photons ionisants émis par les sources irradiantes situées dans le champ d'observation. Le collimateur 10 peut être de type sténopé ou masque codé. Dans l'exemple qui suit, le collimateur 10 est de type masque codé.

La gamma caméra peut être de type gamma caméra Compton, auquel cas la présence d'un collimateur n'est pas nécessaire. Une gamma caméra Compton comporte un circuit électronique spécifique, permettant d'estimer les positions respectives, dans le matériau détecteur, de deux interactions temporellement coïncidentes, et d'estimer une direction de propagation du rayonnement incident.

Dans un mode de réalisation non revendiqué, l'unité de sous-pixellisation 14 divise chaque pixel $12_i$ en pixels virtuels (ou sous-pixels) $13_{i,j}$. Le terme « pixel virtuel » désigne le fait qu'un pixel virtuel $13_{i,j}$ n'a pas de réalité physique : il résulte d'une segmentation virtuelle de chaque pixel physique $12_i$. L'indice j est un entier correspondant à un rang de chaque pixel virtuel $13_{i,j}$ dans un pixel $12_i$, avec $1 \leq j \leq J$. $J$ correspond au nombre de pixels virtuels dans chaque pixel. Le rang $j$ d'un pixel virtuel $13_{j,j}$ définit la position du pixel virtuel dans un pixel $12_i$. Les pixels virtuels $13_{i,j}$ de même rang sont disposés à la même position relativement au pixel $12_i$. Dans l'exemple représenté sur la figure 1B, le rang $j = 1$ correspond au coin supérieur gauche et le rang $j = J$ correspond au coin inférieur droit. Dans cette figure, $J = 9$ : chaque pixel est segmenté en 9 pixels virtuels. La sous-pixellisation permet de former une image gamma $G$ comportant un nombre de pixels virtuels $13_{i,j}$ égal à $I \times J$. Les pixels virtuels $13_{i,j}$ sont alignés selon des lignes (parallèlement à un axe X) et des colonnes (parallèlement à un axe Y). La position de chaque pixel virtuel $13_{ij}$ sur la surface de détection 12 est repérée par des coordonnées $(x, y)$. Le lien entre chaque pixel virtuel $13_{ij}$ et chaque position $(x, y)$ est bijectif, de tel sorte qu'à chaque position de coordonnées $(x, y)$ correspondant un seul pixel virtuel $13_{j,j}$, et réciproquement.

La gamma caméra 1 peut comporter une unité programmée pour déterminer de la profondeur d'interaction dans le matériau détecteur, à partir de signaux de détection formés par plusieurs pixels.

Sous l'effet d'une collecte de porteurs de charge, chaque pixel $12_i$ génère une impulsion dont l'amplitude dépend de l'énergie libérée, dans le matériau détecteur, par un photon ionisant, au cours d'une interaction, cette énergie étant usuellement désignée « énergie de l'interaction ». De façon optionnelle et avantageuse, la gamma-caméra 1 comporte une unité de spectrométrie 15. L'unité de spectrométrie 15 permet une estimation aussi précise que possible de l'amplitude des impulsions résultant de la collecte de porteurs de charge suite à une interaction. L'unité de spectrométrie 15 peut comporter aussi bien des moyens électroniques (circuit de mise en forme d'impulsion, analyseur multicanal, convertisseur analogique numérique) que des moyens logiciels. L'estimation de l'amplitude d'une impulsion permet d'estimer l'énergie de l'interaction. Cette énergie doit être estimée aussi précisément que possible. La plage d'énergie adressée est généralement comprise entre 10 keV et quelques centaines de keV, voire quelques MeV. Il est souhaitable que la précision de l'énergie soit de l'ordre du %, voire inférieure.

Ainsi, l'unité de spectrométrie 15 permet d'obtenir un spectre du rayonnement détecté par chaque pixel. L'unité de spectrométrie 15 permet de sélectionner des bandes d'énergies d'intérêt, correspondant à des photons non diffusés, c'est-à-dire des photons n'ayant pas été déviés depuis leur émission par la source d'irradiation. Leur sélection, dans des bandes d'énergies prédéterminées, permet d'éliminer un bruit correspondant aux photons diffusés. Ces derniers ayant été déviés depuis leur émission, ils n'apportent pas d'information utile pour localiser les sources irradiantes. La diffusion est donc une source de bruit, que la spectrométrie permet de limiter de façon significative. Chaque bande d'énergie $E$ s'étend entre $E \pm \delta E$. $2\delta E$ correspond alors à la largeur spectrale de chaque bande d'énergie. Par exemple, $2\delta E = 0,2\ keV$.

Un autre avantage des gamma caméras spectrométriques est que la connaissance de l'énergie des photons détectés permet une identification des isotopes responsables de l'irradiation. Il s'agit d'une information importante dans le domaine de la radioprotection, ou dans la gestion des déchets radioactifs, ou encore dans le démantèlement des installations nucléaires, ou la caractérisation radiologique post accidentelle.

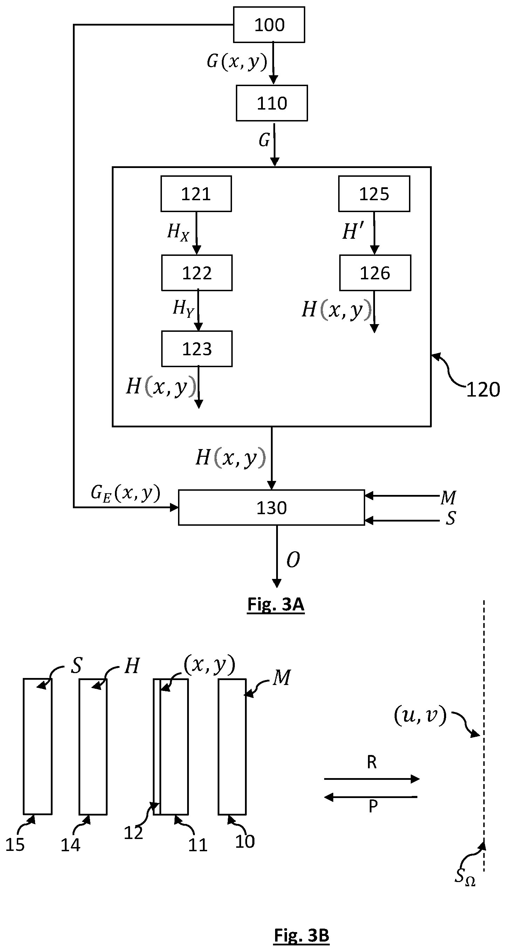

La gamma caméra 1 comporte une mémoire 16, configurée pour mémoriser une quantité d'interactions $G(x, y)$ respectivement affectées à chaque pixel virtuel $13_{ij}$ de position $(x, y)$. La gamma caméra peut comporter une unité de traitement 17 configurée pour former une image gamma $G$ à partir des interactions positionnées, par l'unité de sous-pixellisation 14, dans chaque pixel virtuel $13_{i,j}$. L'image gamma $G$ est définie selon des coordonnées $(x, y)$, parallèlement à la surface de détection 12, chaque coordonnée $(x, y)$ correspondant à un pixel virtuel $13_{i,j}$. Chaque point $G(x, y)$ de l'image gamma $G$ correspond à une quantité d'interactions assignées, par l'unité de sous-pixellisation 14, à un pixel virtuel $13_{i,j}$ de coordonnées $(x, y)$ sur la surface de détection 12. De façon usuelle, l'unité de traitement peut comporter un microprocesseur programmé pour exécuter des instructions pour mettre en œuvre certaines étapes décrites par la suite, en lien avec la figure 3A.

Lorsqu'on met en œuvre le circuit de spectrométrie 15, la mémoire 16 peut mémoriser une quantité d'interactions $G_E(x, y)$ dans plusieurs bandes d'énergie $E$ respectivement affectées à chaque pixel virtuel de coordonnées $(x, y)$. L'unité de traitement 17 peut générer, à partir d'un même champ d'observation, des image gamma $G_E$ respectivement représentatives d'une bande d'énergie $E$. Connaissant le spectre d'émission d'un isotope, il est également possible de combiner différentes bandes d'énergie, de façon à former une image gamma $G_k(x, y)$ correspondant à l'isotope. L'indice $k$ désigne un isotope. La combinaison des différentes bandes d'énergie est effectué en fonction des probabilités d'émission d'énergie de l'isotope, ces dernières étant connues. On prend alors en compte les schémas de désintégration d'isotopes susceptibles de constituer les sources irradiantes du champ d'observation. Par schéma de désintégration d'un isotope, on entend l'énergie, ou les énergies, d'émission ainsi que les taux d'embranchement (probabilités d'émission d'un photon pour les différentes énergies d'émission).

La gamma caméra 1 comporte une unité de traitement 18, configurée pour former une image objet $O$ à partir de l'image gamma $G$ résultant de l'unité de sous-pixellisation 14, ou, plus généralement à partir d'une quantité d'interactions détectées par chaque pixel virtuel, éventuellement par bandes d'énergie. La formation de l'image objet peut suivre un algorithme de reconstruction, comme décrit par la suite.

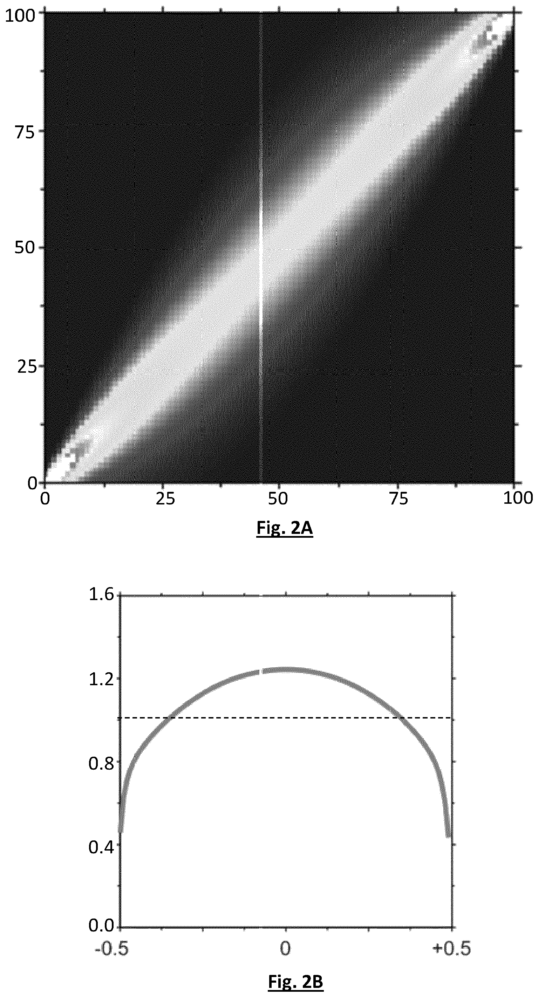

Les inventeurs ont constaté que la segmentation en pixels virtuels $13_{ij}$ est une source de non uniformité de la sensibilité de la gamma caméra. La figure 2A représente, pour un pixel $12_l$, une fonction de réponse spatiale de l'unité de sous-pixellisation. Cette figure a été obtenue par simulation, en prenant en compte une unité de sous-pixellisation telle que décrite dans US9322937B2, en prenant en compte un pixel de 2,5 mm de côté. L'axe des ordonnées correspond à la position réelle d'une interaction, selon un axe longitudinal X, à l'intérieur d'un pixel. L'axe des abscisses correspond à une position « virtuelle » attribuée par l'unité de sous-pixellisation 14. Dans cet exemple, le pixel a été virtuellement subdivisé en 100 incréments selon l'axe X. Chaque incrément correspond à un pas spatial de 25 μm. Le niveau de gris correspond à la valeur d'une probabilité d'attribution de la position repérée sur l'axe des abscisses alors que la position réelle correspond à la position repérée sur l'axe des ordonnées. Chaque ligne de la matrice correspond à une distribution de probabilités d'affectation d'une position d'une interaction, résultant de l'unité de sous-pixellisation, sachant la position réelle de l'interaction. Chaque colonne de la matrice correspond à une distribution de probabilités de la position réelle d'une interaction, sachant une position de l'interaction résultant de l'unité de sous-pixellisation.

On observe que la probabilité d'affectation est plus largement distribuée au centre du pixel (coordonnée 50 sur la figure 2A) qu'aux bordures du pixel (coordonnées 0 et 100 sur la figure 2A). La figure 2A a été simulée en prenant en compte une énergie de photons de 122 keV. La figure 2A dépend de l'énergie des photons. Plus l'énergie est élevée, plus la distribution de probabilité d'attribution d'une position est étroite.

Sur la figure 2B, la courbe en trait plein correspond à une projection de la figure 2A sur l'axe des abscisses. Cela correspond à une distribution de probabilité d'attribution de chaque position « virtuelle » selon l'axe X lors d'une irradiation d'un pixel avec un rayonnement spatialement homogène. Sur la figure 2B, l'axe des abscisses correspond à une position à l'intérieur du pixel, l'abscisse 0 correspondant au centre du pixel et les abscisses 0,5 et -0,5 correspondent aux bordures gauche et droite du pixel. L'axe des ordonnées correspond à la probabilité qu'un pixel virtuel, correspondant à l'abscisse, soit considéré, par l'unité de sous-pixellisation 14, comme correspondant à la position d'une interaction, alors que la distribution spatiale de l'irradiation est homogène. On observe que l'unité de sous-pixellisation 14 tend à surestimer le nombre d'interactions considérées comme positionnées au centre du pixel, au détriment du nombre d'interactions considérées comme positionnées à la bordure de chaque pixel. Autrement dit, les pixels virtuels centraux (i-e au centre d'un pixel) ont une sensibilité plus élevée que les pixels virtuels périphériques (i-e à la périphérie d'un pixel). La droite en pointillés montre la distribution de probabilité de la position affectée à chaque interaction dans le cas d'une unité de sous-pixellisation présentant une sensibilité spatiale uniforme.

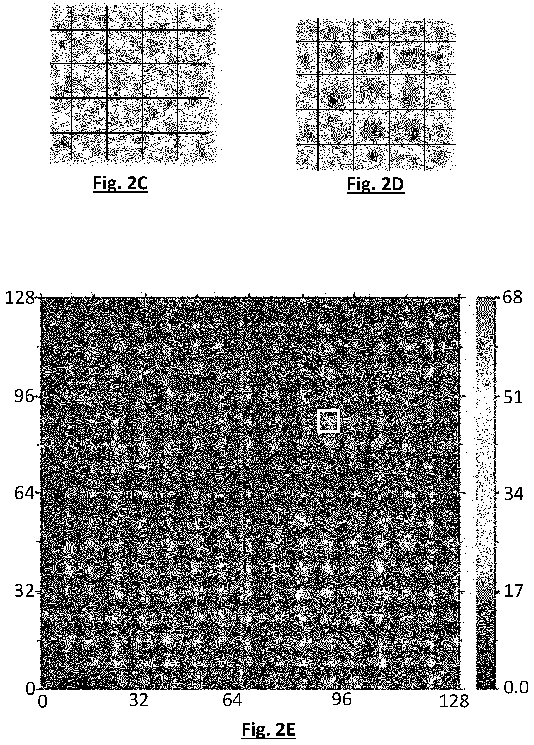

Les figures 2C et 2D représentent une partie d'une image gamma sous-pixélisée, i-e résultant de l'unité de sous-pixellisation 14, une grille en traits noirs matérialisant les contours de différents pixels. Sur ces figures chaque pixel virtuel correspond à un point. Les figures 2C et 2D résultent de simulations en considérant une irradiation homogène. La figure 2C correspond à la position réelle des interactions. La figure 2D montre les positions des interactions en mettant en œuvre l'unité de sous-pixellisation 14. Sur ces figures, plus le niveau de gris est sombre, plus la quantité d'interactions détectées est importante. On observe que l'unité de sous-pixellisation induit un tramage de l'image gamma : les pixels virtuels situés au centre de chaque pixel sont surpondérés, au détriment des pixels virtuels situés en bordure des pixels. Cela est la conséquence de la distribution spatiale représentée sur la figure 2B.

La figure 2E est une image gamma $G$ d'un rayonnement uniforme, essentiellement émis par $^{60}$Co, (1173 keV et 1332 keV). Il s'agit d'une image acquise sur site, comportant une contribution de rayonnements diffusés. Sur cet exemple, la surface de détection 12 comporte des lignes de 16 pixels et des colonnes de 16 pixels, soit un total de 256 pixels. Chaque pixel s'étend selon une surface de 2,5 mm par 2,5 mm. Chaque pixel est sous-pixellisé en $J$ = 64 pixels virtuels (8 x 8 pixels virtuels). Ainsi, l'image gamma formée s'étend selon 128 pixels de côté. Sur la figure 2E, plus le niveau de gris est clair, plus la quantité d'interactions détectées est importante. Le tramage évoqué en lien avec la figure 2D est évident : les bordures de chaque pixel peuvent être visualisées, du fait qu'elles comportent moins d'interaction détectées que les parties centrales de chaque pixel. Ainsi, une irradiation spatialement homogène conduit à la formation d'une image gamma spatialement non homogène. Lorsque l'image gamma fait l'objet d'un procédé de reconstruction, comme décrit par la suite, une telle non-uniformité peut entraîner la formation d'artéfacts sur l'image reconstruite : cf. figures 7A et 7B décrites par la suite.

Les figures 2A à 2E traduisent le fait que l'unité de sous-pixellisation 14 est affectée d'une fonction de sensibilité spatiale non uniforme, la sensibilité des pixels virtuels au centre de chaque pixel étant supérieure à la sensibilité des pixels virtuels périphériques, ces derniers étant adjacents des bordures de chaque pixel.

Afin de corriger la non-homogénéité de la sensibilité spatiale non uniforme de l'unité de sous-pixellisation 14, une première solution consiste à exposer la gamma caméra à un rayonnement homogène, de façon à former une image de calibration, prenant en compte la fonction de réponse. Il s'agit d'une solution techniquement simple, mais difficile à mettre en œuvre. En effet, la fonction de sensibilité spatiale dépend de l'énergie du rayonnement incident. Or, l'énergie du rayonnement incident peut varier, en fonction des isotopes composant les sources irradiantes. De plus, elle est difficilement prévisible, en particulier lorsque les sources irradiantes sont composés de plusieurs isotopes, dans des proportions variables, et inconnues, et/ou lorsque l'irradiation à laquelle est exposée la gamma caméra comporte une proportion élevée de rayonnement diffusé.

L'inventeur propose un procédé de détermination d'une fonction de sensibilité spatiale. La fonction de sensibilité spatiale permet une correction de la réponse spatiale, non homogène, de l'unité de sous-pixellisation 14. La correction peut être mise en œuvre sur le terrain, sans recours à un rayonnement de calibration homogène. Un aspect particulièrement important est que la fonction de sensibilité spatiale peut être déduite de l'image gamma acquise par la gamma caméra, et destinée à faire l'objet d'une reconstruction, de façon à obtenir la position des sources irradiantes dans le champ d'observation. Le procédé ne suppose pas une image de calibration préalablement acquise dans des conditions de laboratoire. L'image de calibration peut être effectuée à partir de l'image gamma acquise par la caméra, sur le terrain.

La figure 3A schématise les principales étapes du procédé, ces dernières étant décrites ci-après. La figure 3B représente les différentes grandeurs utilisées et schématise les fonctions de réponse, spatiales ou spectrales, respectivement associées au collimateur 10, à l'unité de sous-pixellisation 14, et au circuit de spectrométrie 15.

Etape 100 : détection d'interactions. La gamma caméra 1 est disposée dans un champ d'observation $\Omega$ comportant potentiellement des sources irradiantes 5. Au cours d'une période d'acquisition, à partir de signaux de détection émanant de pixels $12_i$, l'unité de sous-pixellisation 14 assigne chaque interaction détectée à un pixel virtuel $13_{i,j}$, de coordonnée $(x, y)$. On obtient ainsi une quantité $G(x, y)$ d'interactions assignées à chaque pixel virtuel.

Etape 110 : formation d'une image gamma $G$.

Les quantités $G(x, y)$ assignées à chaque pixel peuvent être rassemblées et ordonnées sous la forme d'une image gamma G. Chaque image gamma $G$ est définie selon des lignes et des colonnes. La figure 4A est un exemple d'une image gamma $G$ de 128 x 128 pixels.

La valeur $G(x, y)$ de l'image gamma, pour chaque pixel virtuel de position $(x, y)$ correspond au nombre d'interactions détectées et positionnées dans le pixel virtuel.

Etape 120 : Détermination d'un poids $H(x, y)$ pour chaque pixel virtuel.

A partir de la quantité d'interactions $G(x, y)$ détectées par chaque pixel virtuel $13_{ij}$ de coordonnées $(x, y)$, l'étape 120 détermine un poids $H(x, y)$ pour chaque pixel virtuel. Le poids $H(x, y)$ est représentatif d'une sensibilité de la gamma caméra pour chaque pixel virtuel. Dans l'exemple décrit, plus le poids est élevé, plus la sensibilité du pixel virtuel est élevée : cela correspond au fait que la probabilité d'affectation d'une interaction au niveau du pixel virtuel est élevée. Le poids $H(x, y)$ est une estimation d'une probabilité qu'une interaction, dont les coordonnées, sur la surface de détection 12, soit assignée audit pixel virtuel $13_{ij}$ de coordonnées $(x, y)$. Lorsque la fonction de sensibilité spatiale de l'unité de sous-pixellisation 14 est homogène, la probabilité est égale pour tous les pixels virtuels $13_{ij}$.

A partir de l'image gamma $G$ résultant de l'unité de formation d'image, on peut former une image de calibration $H$, représentative de la réponse de l'unité de sous-pixellisation. L'image de calibration $H$ est définie pour chaque pixel virtuel $13_{i,j}$. Chaque point $H(x, y)$ de l'image de calibration $H$ est un poids $H(x, y)$ assigné au pixel virtuel de coordonnées $(x, y)$.

D'une façon générale, le poids $H(x, y)$ de chaque pixel virtuel est obtenu en répartissant les pixels virtuels en différents groupes, et en additionnant les valeurs de la quantité d'interaction $G(x, y)$ assignées aux pixels virtuels d'un même groupe. Différents modes de réalisation sont envisagés, dans lequel les groupes de pixels virtuels sont :

- des pixels virtuels disposés selon une même ligne ou une même colonne : cf. sous-étapes 121 à 123.
- des pixels virtuels de même rang $j$ : cf. sous-étapes 125 à 126.

Deux modes de réalisation peuvent être envisagés. Un premier mode de réalisation est décrit en lien avec les sous-étapes 121 à 123. Un deuxième mode de réalisation est décrit en lien avec les sous-étapes 125 à 126.

<u>Sous-étape 121</u> : formation d'un premier vecteur $H_X$, représentatif de la quantité totale d'interactions $G(x, y)$ détectées dans les pixels virtuels de chaque colonne (même coordonnée $y$).

A partir des quantités d'interaction $G(x, y)$ détectées par chaque pixel virtuel, on établit un premier vecteur $H_X$. Le premier vecteur $H_X$ est déterminé pour différentes colonnes de pixels virtuels, ce qui correspond à différentes colonnes de l'image gamma $G$. Chaque terme $H_X(y)$ du premier vecteur est désigné « premier terme ». Chaque premier terme $H_X(y)$ est associé à une colonne de pixels virtuels. Chaque premier terme correspond à un nombre d'interactions assignées à des pixels virtuels d'une même colonne. Ainsi, chaque premier terme est par exemple tel que :

$$H_X(y) = \sum_{x=1}^{x=N_x} G(x, y) \quad (1)$$

où $N_x$ est le nombre de lignes de pixels virtuels considérées, ce qui correspond au nombre de lignes de l'image gamma G.

La dimension de $H_X$ est $(N_y, 1)$, où $N_y$ est le nombre de colonnes de pixels virtuels. Le vecteur $H_X$ peut être considéré comme une projection de l'image gamma $G$, selon l'axe $Y$, sur l'axe $X$.

La figure 4B est une représentation graphique d'un premier vecteur $H_X$ établi selon l'image gamma représentée sur la figure 4A. L'axe des abscisses correspond à un rang de chaque terme du premier vecteur $H_X$, compris entre 1 et 128. L'axe des ordonnées correspond à la valeur de chaque premier terme du premier vecteur.

<u>Sous-étape 122</u> : formation d'un deuxième vecteur $H_Y$, représentatif de la quantité totale d'interactions $G(x, y)$ détectées dans les pixels virtuels de chaque ligne (même coordonnée $x$).

De façon similaire, à partir des quantités d'interaction $G(x, y)$ détectées par chaque pixel-virtuel, on établit un deuxième vecteur $H_Y$. Le deuxième vecteur $H_Y$ est déterminé pour différentes lignes de pixels virtuels, ce qui correspond à différentes lignes de l'image gamma $G$. Chaque terme $H_Y(x)$ du deuxième vecteur est désigné « deuxième terme ». Chaque deuxième terme $H_Y(x)$ est associé à une ligne de pixels virtuels. Chaque deuxième terme correspond à un nombre d'interactions assignées à des pixels virtuels d'une même ligne. Ainsi, chaque deuxième terme est par exemple tel que :

$$H_Y(x) = \sum_{y=1}^{y=N_y} G(x, y) \quad (2)$$

La dimension de $H_Y$ est $(1, N_x)$. Le vecteur $H_Y$ peut être considéré comme une projection de l'image gamma $G$, selon l'axe $X$, sur l'axe $Y$.

La figure 4C est une représentation graphique d'un deuxième vecteur $H_Y$, établi selon l'image gamma représentée sur la figure 4A. L'axe des abscisses correspond à un rang de chaque terme du vecteur $H_Y$, compris entre 1 et 128. L'axe des ordonnées correspond à la valeur de chaque terme.

Sous-étape 123 : Formation de la matrice de sensibilité

On effectue le produit dyadique de $H_X$ et $H_Y$, de façon à obtenir une matrice $H_{XY}$, de dimension,

$$(N_x, N_y) : H_{XY} = H_X \otimes H_Y \quad (3).$$

$\otimes$ est l'opérateur « produit dyadique ».

Ainsi, la valeur $H_{XY}(x, y)$ de chaque terme de la matrice $H_{XY}$ est $H_X(y)H_Y(x)$ :

$$H_{XY}(x, y) = H_X(y) \times H_Y(x) \quad (4)$$

La matrice $H_{XY}$ est de préférence normalisée par la moyenne $\overline{H_{XY}}(x, y)$ de l'ensemble des termes $H_{XY}(x, y)$. Ainsi, la matrice de sensibilité $H$ est telle que

$$H(x, y) = \frac{H_{XY}(x, y)}{\overline{H_{XY}}(x, y)} \quad (5)$$

La matrice de sensibilité $H$ est de même taille que l'image gamma $G$. Chaque terme $H(x, y)$ de la matrice de sensibilité $H$ correspond à un poids, assigné au pixel virtuel de coordonnées $(x, y)$.

La figure 4D montre une matrice de sensibilité $H$ établie en combinant les vecteurs $H_X$ et $H_Y$. On peut observer que la matrice de sensibilité $H$ met en évidence le tramage des images gamma discutés ci-dessus. La matrice de sensibilité $H$ comporte des lignes sombres horizontales ou verticales, qui correspondent à des zones dans lesquelles le poids $H(x, y)$ assigné à chaque pixel virtuel est faible.

Selon un autre mode de réalisation, décrit en lien avec les sous-étapes 125 et 126, chaque groupe de pixels virtuels rassemble des pixels virtuels de même rang.

Sous-étape 125 : A partir des quantités d'interaction $G(x, y)$ détectées par chaque pixel virtuel, résultant de l'étape 100, on calcule une moyenne de la valeur des pixels virtuels de même rang. La figure 5A représente un autre exemple d'image gamma $G$, acquise sur le terrain, avec une quantité importante de rayonnement diffusé. La figure 5B montre une image moyenne $H'$ dont chaque point correspond à une moyenne des pixels virtuels de même rang de l'image gamma $G$. L'image moyenne $H'$ comporte $J$ points, $J$ correspondant au nombre de pixels virtuels par pixel.

Chaque terme $H'(x_j, y_j)$ de l'image moyenne $H'$ est tel que

$$H'(x_j, y_j) = mean\big(G(x, y)_j\big) \quad (6)$$

où $G(x, y)_j$ correspond à la quantité d'interactions détectées par chaque pixel virtuel de rang $j$. $mean$ désigne l'opérateur moyenne.

Selon une possibilité, l'image moyenne $H'$ est normalisée, de telle sorte que :

$$H'(x_j, y_j) = \frac{mean\big(G(x, y)_j\big)}{mean(G(x, y))} \quad (6)'$$

La figure 5B représente une image moyenne $H'$ obtenue à partir de l'image gamma représentée sur la figure 5A.

Sous étape 126 : à partir de l'image moyenne $H'$, formation de l'image de calibration $H$ par concaténation de l'image moyenne : l'image moyenne $H'$ est dupliquée $N_{Xi}$ fois selon l'axe X et $N_{Yi}$ fois selon l'axe Y, $N_{Xi}$ et $N_{Yi}$ désignant le nombre de pixels $12_i$ par respectivement par ligne et colonne de la surface de détection 12. On obtient ainsi une image de calibration $H$ de même taille que l'image gamma $G$. La figure 5C représente un exemple d'image de calibration obtenue par concaténation d'une image moyenne $H'$.

Le mode de réalisation décrit en lien avec les sous-étapes 125 et 126 suppose une certaine homogénéité spatiale du rayonnement détecté par la gamma caméra. Ce mode de réalisation est particulièrement approprié pour corriger les non-uniformités résultant de l'unité de sous-pixellisation.

L'étape 120 permet de définir, pour chaque pixel virtuel, un poids $H(x, y)$ qui est ensuite utilisé pour traiter les quantités d'interactions $G(x, y)$ ou $G_E(x, y)$ affectées à chaque pixel virtuel durant l'exposition, et mémorisées dans la mémoire 16. Le traitement vise à former une image objet $O$ du champ d'observation $\Omega$. Par image objet, on entend une distribution spatiale de sources irradiantes dans le champ d'observation $\Omega$. Selon une possibilité, on forme une image objet $O_k$ représentative d'une distribution spatiale de sources irradiantes comportant un isotope $k$.

Lorsqu'on utilise un collimateur 10 de type collimateur à sténopé, le traitement effectué par l'unité de traitement 18 est relativement simple. En effet, l'image gamma permet une représentation immédiate de l'image objet. Le traitement peut être une simple normalisation de l'image gamma *G* par l'image de calibration *H.*

Dans cet exemple, la gamma caméra 1 comporte un collimateur 10 à masque codé. Ce type de collimateur est connu de de l'homme du métier. Avec ce type de collimateur, l'image acquise par l'imageur ne permet pas une représentation directe des sources irradiantes dans le champ d'observation. L'image gamma *G* subit un traitement, prenant en compte une fonction de réponse de la caméra, de façon à permettre d'obtenir une image du champ d'observation, représentative de la position des sources dans le champ d'observation $\Omega$. Le passage de l'image gamma, représentative d'une quantité d'interactions détectée par chaque pixel virtuel, après application de la fonction de sensibilité spatiale, à l'image *O* du champ d'observation $\Omega$ est décrite ci-après. L'image *O* est discrétisée en différentes coordonnées $(u,v)$.

Etape 130 : reconstruction

Le modèle global de formation d'image est tel que :

$$G_E(x, y) = H(x, y) \sum_k S(E, k)[M(u, v) * O_k(u, v)](x, y) \ (10)$$

où :

- $G_E$ est une image gamma formée dans une bande d'énergie *E,* l'image étant définie en différents points $(x, y)$, chaque point correspondant à un pixel virtuel. Il s'agit d'une grandeur mesurée, obtenue à partir des interactions détectées lors de l'étape 100, la sélection en bande d'énergie étant effectuée par l'unité de spectrométrie 15.
- $H(x, y)$ est le poids affecté à chaque pixel virtuel de coordonnées $(x, y)$, résultant de l'étape 120.
- $S(k, E)$ est une probabilité de détection d'un photon dans la bande d'énergie *E* pour une activité unitaire (par exemple 1 Bq) d'un isotope *k. S* est une matrice de réponse spectrale de taille $(N_k, N_E)$, où $N_k$ est le nombre d'isotopes considérés et $N_E$ est le nombre de bandes d'énergie adressées. Il s'agit d'une donnée d'entrée. *S* prend en compte une fonction de réponse spectrale de la gamma caméra. La figure 6 représente deux lignes d'une matrice de réponse spectrale *S,* correspondant respectivement à $^{241}$Am et [57]Co. Sur la figure 6, l'axe des abscisses correspond à un numéro de canal, compris entre 1 et 1024. On observe les pics d'émission de $^{241}$Am et $^{57}$Co, correspondant respectivement aux énergies de 59 keV ($^{241}$Am) et 122 keV et 136 keV ($^{57}$Co).
- *M* est une fonction de réponse spatiale de la gamma caméra pour un photon émis depuis une position $(u, v)$ du champ d'observation $\Omega$ et atteignant le pixel virtuel $(x, y)$. Il s'agit d'une donnée d'entrée, qui dépend de la modalité d'imagerie utilisée.
- $O_k(u, v)$ est une activité de l'isotope *k* à la position $(u, v)$ du champ d'observation. Il s'agit de ce que l'on souhaite estimer. $O_k$ est une image objet de taille $(N_u, N_v)$, où $N_u$ et $N_v$ sont les nombres de coordonnées *u* et *v* selon lesquelles le champ d'observation est discrétisé.

La forme générale de la fonction de réponse spatiale de la gamma caméra est $M(x, y, u, v)$. Lorsque la gamma caméra 1 comporte un collimateur 10, par exemple un collimateur à masque codé, les coordonnées *u, v* sont des coordonnées spatiales. Lorsque la gamma caméra est de type caméra Compton, sans collimateur, les coordonnées *u, v* sont des coordonnées angulaires, correspondant aux angles d'incidence du rayonnement détecté.

L'expression (10) suppose que le champ d'observation soit considéré comme une surface $S_\Omega$, dite surface objet, discrétisée selon des coordonnées $(u, v)$.

La figure 3B schématise les principaux composants de la gamma caméra ainsi que les fonctions de réponse qui leurs sont respectivement associées :

- Le collimateur 10 détermine la fonction de réponse spatiale *M,* qui conditionne une probabilité qu'une interaction détectée en un pixel virtuel de position $(x, y)$ provienne d'une coordonnée $(u, v)$ de la surface objet $S_\Omega$.
- Le circuit de spectrométrie 15, ainsi que le matériau détecteur 11 et les pixels de la surface de détection 12, déterminent la fonction de réponse spectrale *S.*
- L'unité de sous pixellisation 14 détermine la matrice de sensibilité *H,* qui comporte l'ensemble des poids $H(x, y)$ assignés aux différents pixels virtuels.

Le passage de la surface de détection 12 à la surface objet $S_\Omega$ est une rétroprojection R, de l'image gamma *G,* sur la surface objet. Le passage de la surface objet $S_\Omega$ à la surface de détection 12 est une projection P de l'image objet *O* sur la surface de détection 12.

L'expression (10) correspond à une projection P. L'expression (10) peut être écrite de la façon suivante :

$$\hat{G}_E(x,y) = H(x,y) \sum_k S(k,E) \left[ \sum_{u,v} M(x-u, y-v) O_k(u,v) \right] \quad (12)$$

L'objectif de l'étape de reconstruction est d'estimer $\hat{O}_k(u, v)$ à partir d'une ou plusieurs images gamma $G_E$, respectivement déterminées dans une ou plusieurs bandes d'énergie $E$.

L'estimation de $\hat{O}_k(u, v)$ suppose de connaître la réponse spatiale $M$, la réponse spectrale $S$ et la matrice de sensibilité $H$, résultant de l'étape 120, et représentant la fonction sensibilité spatiale.

Selon une approche probabiliste,

$$\hat{O}_k(u,v) = \sum_{E,x,y} p(k,u,v|E,x,y) G_E(x,y) \quad (13)$$

$p(k, u, v|E, x, y)$ est une probabilité de présence d'un isotope $k$ à la position $(u, v)$ sachant une mesure d'une interaction dans une bande d'énergie $E$ par le pixel virtuel $(x, y)$. Cette probabilité peut être estimée en appliquant le théorème de Bayes

$$p(k,u,v|E,x,y) = \frac{p(E,x,y|k,u,v)p(k,u,v)}{p(E,x,y)} \quad (14)$$

L'expression (13) devient alors

$$\hat{O}_k(u,v) = \sum_{E,x,y} \frac{p(E,x,y|k,u,v)p(k,u,v)}{p(E,x,y)} G_E(x,y) \quad (15)$$

Les probabilités $p(E, x, y|k, u, v)$ et $p(E, x, y)$ sont établies à partir du modèle direct (projection), correspondant à (12).

L'expression (15) devient alors :

$$\hat{O}_k(u,v) = \sum_{E,x,y} \frac{S(k,E)M(u-x,v-y)O_k(u,v)}{\sum_{k,u,v} H(x,y) \sum_k S(k,E) \left[ \sum_{u,v} M(u-x,v-y) O_k(u,v) \right]} G_E(x,y) \quad (16)$$

$$\hat{O}_k(u,v) = O_k(u,v) \sum_{E,x,y} \frac{S(k,E)M(u-x,v-y)O_k(u,v)}{\sum_{k,u,v} H(x,y) \sum_k S(k,E) \left[ \sum_{u,v} M(u-x,v-y) O_k(u,v) \right]} G_E(x,y) \quad (17)$$

L'estimation $\hat{O}_k(u, v)$ peut être effectuée de façon itérative. Chaque itération, de rang $n$, vise à estimer $\hat{O}_k^{(n+1)}(u,v)$ à partir d'une estimation précédente $\hat{O}_k^{(n)}(u,v)$. Lorsque $n = 0$, l'estimation est effectuée à partir d'une estimation initiale $\hat{O}_k^{(n=0)}(u,v)$. L'estimation initiale peut par exemple être répartition uniforme de l'isotope $k$ sur la surface objet.

A partir d'une première estimation $\hat{O}_k^{(n)}(u,v)$, chaque estimation $\hat{O}_k^{(n+1)}(u,v)$ est telle que :

$$\hat{O}_k^{(n+1)}(u,v)$$

$$= \sum_{E,x,y} \frac{S(k,E)M(u-x,v-y)\hat{O}_k^{(n)}(u,v)}{\sum_{k,u,v} H(x,y) \sum_k S(k,E) \left[ \sum_{u,v} M(u-x,v-y) \hat{O}_k^{(n)}(u,v) \right]} G_E(x,y) \quad (18)$$

$$\hat{O}_k^{(n+1)}(u,v) = \hat{O}_k^{(n)}(u,v) \sum_{x,y} M(u-x,v$$

$$-y) \sum_{E} \frac{S(k,E)}{H(x,y)\sum_k S(k,E)\left[\sum_{u,v} M(u-x,v-y)\hat{O}_k^n(u,v)\right]} G_E(x,y) \quad (19)$$

Les itérations sont effectuées jusqu'à l'atteinte d'un critère d'arrêt des itérations. Le critère d'arrêt des itérations peut être un nombre prédéterminé d'itérations ou un critère d'erreur considéré comme suffisamment faible. Le critère d'erreur peut être une erreur entre l'image acquise $G_E$ et la projection $\hat{G}_E$ de $\hat{O}_k^{(n)}(u,v)$ sur la surface de détection, la projection $\hat{G}_E$ étant obtenue à partir de l'expression (12). Il peut s'agir d'une erreur quadratique ou d'une divergence de Küllback-Leibler entre l'image acquise $G_E$ et la projection $\hat{G}_E$.

Afin de minimiser la taille des grandeurs mathématiques utilisées, l'image gamma $G_E(x, y)$ peut être formée selon un mode liste, selon laquelle l'image est formée par une somme d'interactions détectées. A chaque interaction est affecté un rang $l$, qui peut être établi de façon chronologique Chaque interaction de rang $l$ est assimilée à une fonction de Dirac $\delta$ à la coordonnée $(x_l, y_l)$. De ce fait,

$$G_E(x,y) = \sum_l \delta(x_l, y_l, E_l = E) \quad (20)$$

- $x_l$ et $y_l$ désignant les coordonnées de l'interaction de rang $l$ ;
- $E_l$ est l'énergie détectée pour l'interaction de rang $l$.

L'expression (19) devient :

$$\hat{O}_k^{(n+1)}(u,v) = \hat{O}_k^{(n)}(u,v) \sum_{x,y} M(u-x,v$$

$$-y) \sum_{l} \frac{S(k,E_l)}{H(x_l,y_l)\sum_k S(k,E_l)\left[\sum_{u,v} M(u-x_l,v-y_l)\hat{O}_k^{(n)}(u,v)\right]} \delta_{x_l y_l}(x,y,E_l) \quad (21)$$

$$\hat{O}_k^{(n+1)}(u,v) = \hat{O}_k^{(n)}(u,v) \sum_{x,y} M(u-x,v-y) \sum_{l} p_{kl}^{(n)} \delta_{x_l y_l}(x,y,E_l) \quad (22)$$

où $p_{kl}^{(n)}$ est un facteur de pondération assigné à l'interaction $l$ dans la formation de la distribution spatiale $\hat{O}_k^{(n+1)}$ de l'isotope k dans le champ d'observation.

$$p_{kl}^{(n)} = \frac{S(k,E_l)}{H(x_l,y_l)\sum_k S(k,E_l)\left[\sum_{u,v} M(u-x_l,v-y_l)\hat{O}_k^{(n)}(u,v)\right]} \quad (23)$$

$$\text{Soit } w_{kl}^{(n)} = S(k,E_l)\left[\sum_{u,v} M(u-x_l,v-y_l)\hat{O}_k^{(n)}(u,v)\right] \quad (24)$$

$w_{kl}^{(n)}$ est une probabilité de détection d'une interaction de rang $l$, d'énergie $E_l$, correspondant à un isotope $k$, en prenant en compte la distribution spatiale $\hat{O}_k^{(n)}$.

La somme $\sum_{u,v} M(u-x_l,v-y_l)\hat{O}_k^{(n)}(u,v)$ est un produit de convolution de type $M * \hat{O}_k^{(n)}$, ce qui correspond au modèle direct de la formation de l'image gamma à partir de la connaissance de la répartition spatiale de l'isotope $k$ dans le champ d'observation. Il s'agit d'une estimation de l'image gamma $G$, au point de coordonnées $(x_l, y_l)$, en prenant en compte la distribution spatiale de $\hat{O}_k^n$ l'isotope $k$ dans le champ d'observation.

$S(k, E_l)$ correspond à une composante d'énergie de la probabilité $w_{kl}^{(n)}$, tandis que $\sum_{u,v} M(u-x_l,v-y_l)\hat{O}_k^{(n)}(u,v)$ correspond à une composante spatiale de la probabilité $w_{kl}^{(n)}$. La somme

$\sum_k w_{kl}^{(n)} = \sum_k S(k, E_l) \left[ \sum_{u,v} M(u - x_l, v - y_l) \hat{O}_k^{(n)}(u, v) \right]$ correspond à la somme de probabilités $w_{kl}^{(n)}$ sur l'ensemble des isotopes *k*.

Compte tenu de (23) et de (24),

$$p_{kl}^{(n)} = \frac{S(k, E_l)}{H(x_l, y_l) \sum_k w_{kl}} \quad (25)$$

Dans l'expression (22), $\sum_l p_{kl}^{(n)} \delta(x_l, y_l, E_l)$ peut être assimilé à une erreur relative $\varepsilon_k^{(n)}(x, y)$, pour l'isotope *k,* dont la rétroprojection donne une image de mise à jour $U_k^{(n)}$ pour l'isotope *k.*

L'expression (22) peut se ramener à :

$$\hat{O}_k^{(n+1)}(u, v) = \hat{O}_k^{(n)}(u, v) U_k^{(n)}(u, v) \quad (26)$$

avec

$$U_k^{(n)}(u, v) = \sum_{x,y} M(u - x, v - y) \varepsilon_k^{(n)}(x, y) \quad (27)$$

L'équation (27) correspond à une rétroprojection du terme d'erreur relative $\varepsilon_k^{(n)}$ dans le champ d'observation $\Omega$, par convolution avec la fonction de réponse *M* du collimateur.

L'équation (26) est une équation de mise à jour de la distribution spatiale $\hat{O}_k^{(n)}(u, v)$ de l'isotope *k* dans le champ d'observation, à chaque itération *n.*

Le processus de reconstruction précédemment décrit montre que la matrice de sensibilité *H* est prise en compte pour compenser la non uniformité de la sensibilité de la gamma caméra, suite au processus de sous-pixellisation. Le poids *H*(*x, y*) permet ainsi de pondérer la prise en compte d'interactions positionnées aux coordonnées (*x, y*). Ainsi, en fonction de la valeur *H*(*x, y*), plus la valeur de *H*(*x, y*) est faible, plus le poids $p_{kl}^n$ assigné à une interaction positionnée en (*x, y*) est important. Cela permet une surpondération des interactions détectées en des coordonnées auxquelles la valeur de *H*(*x, y*) est faible.

Dans les étapes qui viennent d'être décrites, les étapes 120 ainsi que 130 sont effectuées à partir des interactions détectées lors de l'étape 100. Ainsi, la reconstruction de l'image objet *O* est effectuée en utilisant des interactions *G*(*x, y*) détectées ayant été utilisées pour former la matrice de sensibilité *H.*

Selon une variante, la matrice de sensibilité *H* est mise à jour périodiquement. Entre deux mises à jour, la gamma caméra est exposée à différents champs d'observation. Lors de chaque période d'acquisition, l'image objet est reconstruite en utilisant une matrice de sensibilité *H* préalablement déterminée. Autrement dit, l'étape de reconstruction 130 peut être mise en œuvre en utilisant des poids *H*(*x, y*) préalablement établis, à partir d'une image gamma différente de celle sur la base de laquelle l'étape de reconstruction est effectuée. Il est cependant préférable d'utiliser une fonction de calibration *H* déterminée en exposant la gamma caméra à un rayonnement comparable, du point de vue énergétique, au rayonnement auquel est exposé la gamma caméra lors de l'acquisition de l'image gamma faisant l'objet de la reconstruction.

Un avantage notable de l'invention est que les poids *H*(*x, y*) peuvent être mis à jour, au cours de chaque acquisition d'une image gamma, ce qui permet une prise en compte de l'uniformité de détection en prenant en compte les conditions d'acquisition. Cela permet notamment une prise en compte d'effets induits par des sources irradiantes situées hors du champ d'observation, mais pouvant avoir une influence sur l'image acquise. Ainsi, la matrice de sensibilité, résultant de l'étape 120, peut être utilisée pour compenser une sensibilité non uniforme résultant de l'unité de sous-pixellisation, mais également pour compenser une influence de sources irradiantes hors champs où une autre cause de non-uniformité de la sensibilité, par exemple un défaut dans le matériau détecteur.

Les inventeurs ont mis en œuvre le procédé décrit en lien avec les étapes 100 à 130. On a disposé une gamma caméra comportant un détecteur semi-conducteur de type CdZnTe, d'épaisseur 6 mm disposant d'une matrice de 16x16 pixels de côté 2,5 mm, chaque pixel étant sous-pixellisé en 8x8 pixels virtuels : la surface de détection était segmentée en 128x128 pixels virtuels. Le champ d'observation comportait principalement des sources de $^{60}$Co, avec une importante contribution de rayonnement diffusé. Le niveau d'irradiation, au niveau de la caméra, était de 70 μSv/h.

Les figures 7A, 7C et 7E sont des images gamma obtenues respectivement :

- sans traitement ;
- après normalisation par des poids $H(x, y)$ déterminés, à partir de l'image gamma représentée sur la figure 7A, en mettant en œuvre le premier mode de réalisation (sous-étapes 121 à 123) ;
- après normalisation par des poids $H(x, y)$ déterminés, à partir de l'image gamma représentée sur la figure 7A, en mettant en œuvre le deuxième mode de réalisation (sous-étapes 125 à 126).

Les figures 7B, 7D et 7F sont des images objet obtenues en effectuant une reconstruction, telle que décrite dans l'étape 130, respectivement :

- sans prise en compte de poids $H(x, y)$ : l'étape 130 est mise en œuvre en considérant $H(x, y) = 1$ ;
- en prenant en compte des poids tels que déterminés selon le premier mode de réalisation (sous-étapes 121 à 123) ;
- en prenant en compte des poids, tels que déterminés selon le deuxième mode de réalisation (sous-étapes 125 à 126) .

Sans mettre en œuvre l'invention, l'image reconstruite comporte des artéfacts, repérés par des flèches sur la figure 7B. La source irradiante réelle est entourée par des pointillés sur la figure 7B. Les figures 7D et 7F montrent que la mise en œuvre de l'invention permet de limiter la présence des artéfacts. La source irradiante est localisée avec un rapport signal à bruit significativement amélioré. L'invention permet une pondération de la quantité d'interactions détectée par chaque pixel virtuel en amont de la reconstruction. Elle est particulièrement avantageuse lorsque le collimateur est de type masque codé, pour laquelle la non-uniformité de la sensibilité de détection peut générer des artéfacts de reconstruction, tels que représentés sur la figure 7B.

Un avantage notable de l'invention est que les poids assignés à chaque pixel virtuel peuvent être déterminés à l'aide d'une acquisition de signaux de détection alors que la gamma caméra est déployée sur le terrain, sans nécessiter des conditions de laboratoire, dans lesquelles l'irradiation de chaque pixel virtuel est uniforme. La fonction de sensibilité spatiale étant susceptible de varier en fonction de l'énergie du rayonnement auquel la gamma caméra est exposée, la possibilité d'établir une fonction de sensibilité spatiale en fonction des conditions réellement rencontrées sur le terrain est particulièrement avantageux. En effet, ces conditions sont difficilement prévisibles et reproductibles en laboratoire, notamment en cas de présence d'une forte contribution d'un rayonnement diffusé.

Les poids assignés à chaque pixel virtuel peuvent être mis à jour régulièrement, à l'aide d'images gamma acquises sur le terrain. Ainsi, une même fonction de sensibilité spatiale $H$ peut être utilisée pour effectuer une reconstruction d'une image objet à partir d'une image gamma acquise antérieurement ou postérieurement à la détermination de la fonction de sensibilité spatiale. Dans ce cas, il est préférable que le rayonnement auquel est exposé la gamma caméra, lors de l'acquisition de l'image gamma, soit comparable, du point de vue énergétique, au rayonnement ayant été détecté lors de l'établissement de la fonction de sensibilité spatiale utilisée lors de la reconstruction.

Bien que décrit en lien avec une unité de sous-pixellisation, le mode de réalisation décrit en lien avec les étapes 121 à 123 peut être mis en œuvre sur une gamma caméra dont les pixels sont de petite taille, par exemple inférieure à $mm^2$. La subdivision en pixels virtuels n'est pas nécessaire. Ainsi, selon une variante faisant l'objet des revendications annexées, la matrice de sensibilité $H$ peut être constituée en prenant en compte les interactions assignées à chaque pixel, et en regroupant lesdits pixels selon des lignes de pixels et des colonnes de pixels. Les expressions (1) et (2) sont effectuées en prenant en compte respectivement les pixels d'une même colonne et d'une même ligne. On obtient alors une matrice de sensibilité définie pour chaque pixel, un poids étant déterminé pour chaque pixel. Le recours à la matrice de sensibilité peut permettre une prise en compte d'une sensibilité non uniforme de la gamma caméra, du fait de la présence de sources hors champ ou de défauts locaux du matériau détecteur.

**Revendications**

1. Procédé de détermination d'une fonction de sensibilité spatiale d'une gamma caméra, la gamma caméra (1) étant configurée pour localiser des sources irradiantes (5) dans un champ d'observation ($\Omega$), le champ d'observation étant susceptible de contenir des sources irradiantes (5), la gamma caméra comportant :

    - un matériau détecteur (11) ;
    - des pixels ($12_i$), répartis selon une surface de détection (12) du matériau détecteur, chaque pixel étant configuré pour former un signal de détection sous l'effet d'une détection d'une interaction d'un photon ionisant dans le matériau détecteur ;
    - une mémoire (16), configurée pour mémoriser une quantité d'interactions ($G(x, y)$, $G_E(x, y)$) détectées au cours d'une période d'acquisition et respectivement affectées dans chaque pixel;
    le procédé comportant les étapes suivantes:

- a) acquisition de signaux de détection par les pixels ($12_i$) durant une période d'acquisition, chaque signal de détection étant associé à une interaction détectée ;
- b) en fonction des signaux de détection, attribution d'une position ($x, y$) de chaque interaction détectée, durant la période d'acquisition, dans un pixel ($12_i$);
- c) mémorisation, par la mémoire, d'un nombre d'interactions ($G(x, y)$, $G_E(x, y)$) détectées et affectées dans chaque pixel ;

le procédé étant **caractérisé en ce qu'**il comporte, suite à l'étape c),

- d) définition de groupes de pixels, chaque groupe comportant plusieurs pixels;
- e) calcul d'une valeur pour chaque groupe ($H_x(y)$, $H_y(x)$, $H'(x_j, y_j)$), la valeur de chaque groupe étant calculée à partir d'une somme du nombre d'interactions positionnées dans chaque pixel appartenant audit groupe,
- f) à partir de la valeur calculée pour chaque groupe, assignation d'un poids ($H(x, y)$) à chaque pixel, le poids assigné à chaque pixel étant représentatif d'une sensibilité de détection dudit pixel, l'ensemble des poids respectivement assignés à chaque pixel formant la fonction de sensibilité spatiale ($H$) de la gamma caméra.

2. Procédé selon la revendication 1, dans lequel :

- les pixels sont répartis selon des lignes et des colonnes sur la surface de détection ;
- chaque groupe de pixel comporte des pixels appartenant à une même ligne ou à une même colonne ;
- l'étape e) comporte les sous-étapes suivantes :

• e-i) formation d'un premier vecteur ($H_X$), comportant des premiers termes ($H_X(y)$), chaque premier terme étant associé à une colonne de pixels, chaque premier terme comportant une somme de la quantité d'interactions positionnées dans chaque pixel de la colonne ;
• e-2) formation d'un deuxième vecteur ($H_Y$), comportant des deuxièmes termes ($H_Y(x)$), chaque deuxième terme étant associé à une ligne de pixels, chaque deuxième terme comportant une somme de la quantité d'interactions positionnées dans chaque pixel de la ligne;

- l'étape f) comporte les sous-étapes suivantes :

• f-1) pour chaque pixel, calcul d'un produit d'un premier terme ($H_X(y)$), associé à la colonne du pixel, par un deuxième terme ($H_Y(x)$), associé à la ligne du pixel;
• f-2) détermination du poids ($H(x, y)$) assigné au pixel en fonction du produit calculé lors de la sous-étape f-1).

3. Procédé selon la revendication 2, dans lequel la sous-étape f-2) comporte :

- calcul d'une valeur moyenne des produits respectivement calculés, lors de la sous-étape f-1), pour un ensemble de pixels ;
- pour chaque pixel, normalisation du produit résultant de la sous-étape f-1) par la valeur moyenne.

4. Procédé selon l'une quelconque des revendications précédentes, comportant :

- g) élaboration d'une matrice de sensibilité ($H$), chaque point de la matrice de sensibilité correspondant à un pixel de la gamma caméra, la valeur ($H(x, y)$) de la matrice de sensibilité en chaque point correspondant au poids assigné audit pixel.

5. Procédé selon l'une quelconque des revendications précédentes, dans lequel la gamma caméra comporte une unité de traitement (18), configurée pour traiter les interactions mémorisées dans la mémoire, le procédé comportant une étape h) de reconstruction d'une distribution spatiale ($O$, $O_k$) des sources irradiantes (5), dans le champ d'observation, à partir des interactions mémorisées lors de l'étape c) et des poids ($H(x, y)$) assignés à chaque pixel lors de l'étape f).

6. Procédé selon la revendication 5, dans lequel l'unité de traitement effectue une normalisation d'un nombre d'interactions détectées par chaque pixel par le poids affecté audit pixel.

7. Procédé selon la revendication 6, dans lequel :

- chaque pixel est relié à une unité de spectrométrie (15), l'unité de spectrométrie étant configurée pour classer chaque signal de détection dans une bande d'énergie ($E$) parmi plusieurs bandes d'énergies ;
- lors de l'étape b), chaque interaction positionnée dans un pixel est associée à une bande d'énergie détectée ;
- l'étape h) comporte :

    • une prise en compte d'au moins isotope ($k$), l'isotope émettant des photons dans au moins une énergie d'émission ;
    • une reconstruction d'une distribution spatiale de sources irradiantes ($O_k$) comportant l'isotope à partir des interactions positionnées lors de l'étape b).

8. Procédé selon la revendication 7, dans lequel l'étape h) comporte :

- une prise en compte d'une fonction de réponse spectrale ($S$) de chaque pixel, la fonction de réponse spectrale représentant une probabilité de détection ($S(k, E)$), dans différentes bandes d'énergie, de chaque photon émis par l'isotope ($k$) et détecté dans le pixel;
- une prise en compte d'une fonction de réponse spatiale ($M$), la fonction de réponse spatiale représentant une probabilité de détection, dans différents pixels, d'un photon émis à partir d'un point du champ d'observation.

9. Procédé selon l'une quelconque des revendications précédentes, dans lequel la gamma caméra comporte un collimateur (10) définissant le champ d'observation ($\Omega$).

10. Gamma caméra (1), destinée à détecter une présence de sources irradiantes (5) dans un champ d'observation ($\Omega$),la gamma caméra comportant :

- un matériau détecteur (11);
- des pixels ($12_i$), répartis sur une surface de détection du matériau détecteur, chaque pixel étant configuré pour former un signal de détection sous l'effet d'une détection d'une interaction d'un photon ionisant dans le matériau détecteur ;
- une mémoire (16), configurée pour mémoriser une quantité d'interactions détectées au cours d'une période d'acquisition et respectivement affectées dans chaque pixel ;
- une unité de traitement (17), configurée pour traiter les interactions mémorisées dans la mémoire, l'unité de traitement étant configurée pour mettre en œuvre les étapes d) à f) d'un procédé selon l'une quelconque des revendications 1 à 10 à partir des interactions détectées.

11. Procédé de reconstruction d'une distribution spatiale ($O$, $O_k$) de sources irradiantes dans le champ d'observation d'une gamma caméra (1) selon la revendication 10, le procédé comportant les étapes suivantes:

- i) acquisition de signaux de détection par les pixels ($12_i$) de la gamma caméra durant une période d'acquisition, chaque signal de détection étant associé à une interaction détectée;
- ii) mémorisation, par la mémoire, d'un nombre d'interactions détectées et affectées dans chaque pixel ;

le procédé étant **caractérisé en ce qu'**il comporte :

- iii) prise en compte de poids ($H(x, y)$), respectivement assignés à chaque pixel, chaque poids étant déterminé en mettant en œuvre le procédé selon l'une quelconque des revendications 1 à 9, l'étape a) étant effectuée en exposant la gamma caméra à un champ d'observation identique ou différent du champ d'observation auquel la gamma caméra est exposée lors de l'étape i) ;
- iv) reconstruction de la distribution spatiale des sources irradiantes, dans le champ d'observation, à partir des interactions mémorisées lors de l'étape iii) et des poids assignés à chaque pixel lors de l'étape iii).

12. Procédé selon la revendication 11, dans lequel :

- lors de l'étape i), le champ d'observation est identique au champ d'observation de la gamma caméra lors de l'étape a) ;
- l'étape ii) est confondue avec l'étape b) ;
- l'étape iii) est confondue avec l'étape c).

13. Procédé selon la revendication 12, dans lequel :

- lors de l'étape i), le champ d'observation est différent du champ d'observation de la gamma caméra lors de l'étape a) ;
- l'étape iv) est mise en œuvre en prenant en compte des poids assignés à chaque pixel, les poids ayant été établis au cours d'une mise en œuvre des étapes a) à f), préalablement ou postérieurement à l'étape i).

**Patentansprüche**

1. Verfahren zur Bestimmung einer Funktion räumlicher Empfindlichkeit einer Gammakamera, wobei die Gammakamera (1) dazu ausgebildet ist, Strahlungsquellen (5) in einem Beobachtungsfeld ($\Omega$) zu lokalisieren, wobei das Beobachtungsfeld Strahlungsquellen (5) enthalten kann, wobei die Gammakamera umfasst:

   - ein Detektormaterial (11);
   - Pixel ($12_i$), die gemäß einer Detektionsfläche (12) des Detektormaterials verteilt sind, wobei jedes Pixel dazu ausgebildet ist, unter der Wirkung einer Detektion einer Interaktion eines ionisierenden Photons in dem Detektormaterial ein Detektionssignal zu bilden;
   - einen Speicher (16), der dazu ausgebildet ist, eine Menge von Interaktionen (G(x,y), $G_E$(x,y)) zu speichern, die während eines Erfassungszeitraums detektiert und in jedem Pixel zugewiesen wurden;
   wobei das Verfahren die folgenden Schritte umfasst:

      - a) Erfassen von Detektionssignalen durch die Pixel ($12_i$) während eines Erfassungszeitraums, wobei jedes Detektionssignal einer detektierten Interaktion zugeordnet wird;
      - b) in Abhängigkeit von den Detektionssignalen, Zuweisen einer Position (x,y) jeder detektierten Interaktion, während des Erfassungszeitraums, in einem Pixel ($12_i$);
      - c) Speichern, durch den Speicher, einer Anzahl von detektierten und in jedem Pixel zugewiesenen Interaktionen (G(x,y), $G_E$(x,y));

   wobei das Verfahren **dadurch gekennzeichnet ist, dass** es ferner, nach dem Schritt c), umfasst,

      - d) Definition von Pixelgruppen, wobei jede Gruppe mehrere Pixel umfasst;
      - e) Berechnen eines Wertes für jede Gruppe ($H_X$(y), $H_Y$(x), H'($x_j,y_j$)), wobei der Wert jeder Gruppe ausgehend von einer Summe der Anzahl von Interaktionen berechnet wird, die in jedem zu der Gruppe gehörenden Pixel positioniert sind,
      - f) ausgehend von dem für jede Gruppe berechneten Wert, Zuweisen eines Gewichts (H(x,y)) zu jedem Pixel, wobei das jedem Pixel zugewiesene Gewicht repräsentativ für eine Detektionsempfindlichkeit des Pixels ist; wobei die Gesamtheit der jedem Pixel jeweils zugewiesenen Gewichte die Funktion räumlicher Empfindlichkeit (H) der Gammakamera bildet.

2. Verfahren nach Anspruch 1, wobei:

   • die Pixel auf der Detektionsfläche gemäß Zeilen und Spalten verteilt sind;
   • jede Pixelgruppe Pixel umfasst, die zu einer selben Zeile oder einer selben Spalte gehören;
   • der Schritt e) die folgenden Teilschritte umfasst:

      • e-i) Bilden eines ersten Vektors ($H_X$), der erste Terme ($H_X$(y)) umfasst, wobei jeder erste Term einer Spalte von Pixeln zugeordnet ist, wobei jeder erste Term eine Summe der Menge von Interaktionen umfasst, die in jedem Pixel der Spalte positioniert sind;
      • e-2) Bildung eines zweiten Vektors ($H_Y$), der zweite Terme ($H_Y$(x)) umfasst, wobei jeder zweite Term einer Zeile von Pixeln zugeordnet ist, wobei jeder zweite Term eine Summe der Menge von Interaktionen umfasst, die in jedem Pixel der Zeile positioniert sind;

   - der Schritt f) die folgenden Teilschritte umfasst:

      • f-1) für jedes Pixel, Berechnen eines Produkts aus einem ersten Term ($H_X$(y)), der der Spalte des Pixels zugeordnet ist, und einem zweiten Term ($H_Y$(x)), der der Zeile des Pixels zugeordnet ist;
      • f-2) Bestimmen des dem Pixel zugewiesenen Gewichts (H(x,y)) in Abhängigkeit von dem im Teilschritt f-1) berechneten Produkt.

3. Verfahren nach Anspruch 2, wobei der Teilschritt f-2) umfasst:

- Berechnen eines Mittelwerts der im Teilschritt f-1) berechneten Produkte für eine Gesamtheit von Pixeln;
- für jedes Pixel, Normieren des aus dem Teilschritt f-1) resultierenden Produkts durch den Mittelwert.

4. Verfahren nach einem der vorhergehenden Ansprüche, umfassend:

- g) Erarbeiten einer Empfindlichkeitsmatrix (H), wobei jeder Punkt der Empfindlichkeitsmatrix einem Pixel der Gammakamera entspricht, wobei der Wert (H(x,y)) der Empfindlichkeitsmatrix an jedem Punkt dem dem Pixel zugewiesenen Gewicht entspricht.

5. Verfahren nach einem der vorhergehenden Ansprüche, wobei die Gammakamera eine Verarbeitungseinheit (18) umfasst, die dazu ausgebildet ist, die in dem Speicher gespeicherten Interaktionen zu verarbeiten, wobei das Verfahren einen Schritt h) der Rekonstruktion einer räumlichen Verteilung $(0,0_k)$ der Strahlungsquellen (5) in dem Beobachtungsfeld ausgehend von den im Schritt c) gespeicherten Interaktionen und den jedem Pixel im Schritt f) zugewiesenen Gewichten (H(x,y)) umfasst.

6. Verfahren nach Anspruch 5, wobei die Verarbeitungseinheit eine Normierung einer Anzahl von von jedem Pixel detektierten Interaktionen durch das dem Pixel zugewiesene Gewicht ausführt.

7. Verfahren nach Anspruch 6, wobei:

- jedes Pixel mit einer Spektrometrieeinheit (15) verbunden ist, wobei die Spektrometrieeinheit dazu ausgebildet ist, jedes Detektionssignal in ein Energieband (E) unter mehreren Energiebändern einzuordnen;
- im Schritt b) jede in einem Pixel positionierte Interaktion einem detektierten Energieband zugeordnet wird;
- der Schritt h) umfasst:

  • ein Berücksichtigen mindestens eines Isotops (k), wobei das Isotop Photonen in mindestens einer Emissionsenergie emittiert;
  • eine Rekonstruktion einer räumlichen Verteilung von das Isotop umfassenden Strahlungsquellen $(0_k)$ ausgehend von den im Schritt b) positionierten Interaktionen.

8. Verfahren nach Anspruch 7, wobei der Schritt h) umfasst:

- ein Berücksichtigen einer spektralen Antwortfunktion (S) jedes Pixels, wobei die spektrale Antwortfunktion eine Detektionswahrscheinlichkeit (S(k,E)), in verschiedenen Energiebändern, jedes von dem Isotop (k) emittierten und in dem Pixel detektierten Photons darstellt;
- ein Berücksichtigen einer räumlichen Antwortfunktion (M), wobei die räumliche Antwortfunktion eine Detektionswahrscheinlichkeit, in verschiedenen Pixeln, eines ausgehend von einem Punkt des Beobachtungsfelds emittierten Photons darstellt.

9. Verfahren nach einem der vorhergehenden Ansprüche, wobei die Gammakamera einen Kollimator (10) umfasst, der das Beobachtungsfeld ($\Omega$) definiert.

10. Gammakamera (1), die dazu bestimmt ist, ein Vorhandensein von Strahlungsquellen (5) in einem Beobachtungsfeld ($\Omega$) zu detektieren, wobei die Gammakamera umfasst:

- ein Detektormaterial (11);
- Pixel ($12_i$), die auf einer Detektionsfläche des Detektormaterials verteilt sind, wobei jedes Pixel dazu ausgebildet ist, unter der Wirkung einer Detektion einer Interaktion eines ionisierenden Photons in dem Detektormaterial ein Detektionssignal zu bilden;
- einen Speicher (16), der dazu ausgebildet ist, eine Menge von Interaktionen zu speichern, die während eines Erfassungszeitraums detektiert und in jedem Pixel zugewiesen wurden;
- eine Verarbeitungseinheit (17), die dazu ausgebildet ist, die in dem Speicher gespeicherten Interaktionen zu verarbeiten, wobei die Verarbeitungseinheit dazu ausgebildet ist, die Schritte d) bis f) eines Verfahrens nach einem der Ansprüche 1 bis 10 ausgehend von den detektierten Interaktionen durchzuführen.

11. Verfahren zur Rekonstruktion einer räumlichen Verteilung $(0,0_k)$ von Strahlungsquellen im Beobachtungsfeld einer Gammakamera (1) nach Anspruch 10, wobei das Verfahren die folgenden Schritte umfasst:

- i) Erfassen von Detektionssignalen durch die Pixel ($12_i$) der Gammakamera während eines Erfassungszeitraums, wobei jedes Detektionssignal einer detektierten Interaktion zugeordnet wird;
- ii) Speichern, durch den Speicher, einer Anzahl von detektierten und in jedem Pixel zugewiesenen Interaktionen;

wobei das Verfahren **dadurch gekennzeichnet ist, dass** es umfasst:

- iii) Berücksichtigen von Gewichten (H(x,y)), die jedem Pixel zugewiesen sind, wobei jedes Gewicht bestimmt wird, in dem das Verfahren nach einem der Ansprüche 1 bis 9 durchgeführt wird, wobei der Schritt a) ausgeführt wird, indem die Gammakamera einem Beobachtungsfeld ausgesetzt wird, das identisch mit oder verschieden von dem Beobachtungsfeld ist, dem die Gammakamera im Schritt i) ausgesetzt wird;
- iv) Rekonstruktion der räumlichen Verteilung der Strahlungsquellen in dem Beobachtungsfeld ausgehend von den im Schritt iii) gespeicherten Interaktionen und den jedem Pixel im Schritt iii) zugewiesenen Gewichten.

**12.** Verfahren nach Anspruch 11, wobei:

- im Schritt i) das Beobachtungsfeld identisch mit dem Beobachtungsfeld der Gammakamera in Schritt a) ist;
- der Schritt ii) mit dem Schritt b) zusammenfällt;
- der Schritt iii) mit dem Schritt c) zusammenfällt.

**13.** Verfahren nach Anspruch 12, wobei:

- im Schritt i) das Beobachtungsfeld verschieden von dem Beobachtungsfeld der Gammakamera im Schritt a) ist;
- der Schritt iv) unter Berücksichtigung der jedem Pixel zugewiesenen Gewichte durchgeführt wird, wobei die Gewichte während einer Durchführung der Schritte a) bis f) vor oder nach dem Schritt i) festgelegt worden sind.

**Claims**

**1.** Method for determining a spatial-sensitivity function of a gamma camera, the gamma camera (1) being configured to locate radiation sources (5) in a field of observation ($\Omega$), the field of observation being liable to contain radiation sources (5), the gamma camera comprising:

- a detector material (11);
- pixels ($12_i$), distributed over a detecting area (12) of the detector material, each pixel being configured to form a detection signal under the effect of detection of an interaction of an ionising photon in the detector material;
- a memory (16), configured to store a quantity of interactions ($G(x, y)$, $G_E(x, y)$) detected in the course of an acquisition period and respectively assigned to each pixel;

the method comprising the following steps:

- a) acquiring detection signals with the pixels ($12_i$) during one acquisition period, each detection signal being associated with one detected interaction;
- b) depending on the detection signals, attributing a position ($x, y$) of each interaction detected, during the acquisition period, to one pixel ($12_i$);
- c) storing, in the memory, a number of detected interactions ($G(x, y)$, $G_E(x, y)$); assigned to each pixel;

the method being **characterized in that** it comprises, following step c),

- d) defining groups of pixels, each group containing a plurality of pixels
- e) computing a value for each group ($H_X(y)$, $H_Y(x)$, $H'(x_j, y_j)$), the value of each group being computed on the basis of a sum of the number of interactions positioned in each pixel belonging to said group,
- f) on the basis of the value computed for each group, assigning a weight ($H(x, y)$) to each pixel, the weight assigned to each pixel being representative of a detection sensitivity of said pixel, all of the weights respectively assigned to each pixel forming the spatial-sensitivity function ($H$) of the gamma camera.

**2.** Method according to Claim 1, wherein:

- the pixels are distributed in rows and columns over the detecting area;
- each group of pixels contains pixels belonging to the same row or to the same column;
- step e) comprises the following sub-steps:

  • e-i) forming a first vector ($H_X$), containing first terms ($H_X(y)$), each first term being associated with one column of pixels, each first term comprising a sum of the quantity of interactions positioned in each pixel of the column;
  • e-2) forming a second vector ($H_Y$), containing second terms ($H_Y(x)$), each second term being associated with one row of pixels, each second term comprising a sum of the quantity of interactions positioned in each pixel of the row;

- step f) comprises the following sub-steps:

  • f-1) for each pixel, computing a product of multiplication of a first term ($H_X(y)$), associated with the column of the pixel, by a second term ($H_Y(x)$), associated with the row of the pixel;
  • f-2) determining the weight ($H(x, y)$) assigned to the pixel depending on the product computed in sub-step f-1).

3. Method according to Claim 2, wherein sub-step f-2) comprises:

  - computing a mean value of the products respectively computed, in sub-step f-1), for a set of pixels;
  - for each pixel, normalising the product resulting from sub-step f-1) by the mean value.

4. Method according to any one of the preceding claims, comprising:

  - g) generating a sensitivity matrix ($H$), each point of the sensitivity matrix corresponding to one pixel of the gamma camera, the value ($H(x, y)$) of the sensitivity matrix at each point corresponding to the weight assigned to said pixel.

5. Method according to any one of the preceding claims, wherein the gamma camera comprises a processing unit (18) configured to process the interactions stored in the memory, the method comprising a step h) of reconstructing a spatial distribution ($O, O_k$) of the radiation sources (5), in the field of observation, on the basis of the interactions stored in step c) and of the weights ($H(x, y)$) assigned to each pixel in step f).

6. Method according to Claim 5, wherein the processing unit normalizes a number of interactions detected by each pixel by the weight assigned to said pixel.

7. Method according to Claim 6, wherein:

  - each pixel is connected to a spectrometry unit (15), the spectrometry unit being configured to classify each detection signal into one energy band ($E$) among a plurality of energy bands;
  - in step b), each interaction positioned in a pixel is associated with one detected energy band;
  - step h) comprises:

    • taking into account at least one isotope ($k$), the isotope emitting photons in at least one emission energy;
    • reconstructing a spatial distribution of radiation sources ($O_k$) comprising the isotope on the basis of the interactions positioned in step b).

8. Method according to Claim 7, wherein step h) comprises:

  - taking into account a spectral response function ($S$) of each pixel, the spectral response function representing a detection probability ($S(k, E)$), in various energy bands, of each photon emitted by the isotope ($k$) and detected in the pixel;
  - taking into account a spatial response function ($M$), the spatial response function representing a probability of detection, in various pixels, of a photon emitted from one point in the field of observation.

9. Method according to any one of the preceding claims, wherein the gamma camera comprises a collimator (10) defining the field of observation ($\Omega$).

10. Gamma camera (1) intended to detect a presence of radiation sources (5) in a field of observation ($\Omega$), the gamma camera comprising:

- a detector material (11);
- pixels ($12_i$), distributed over a detecting area of the detector material, each pixel being configured to form a detection signal under the effect of detection of an interaction of an ionising photon in the detector material;
- a memory (16), configured to store a quantity of interactions detected in the course of an acquisition period and respectively assigned to each pixel;
- a processing unit (17), configured to process the interactions stored in the memory, the gamma camera being **characterized in that** the processing unit is configured to implement steps d) to f) of a method according to any one of claims 1 to 10 on the basis of the detected interactions.

11. Method for reconstructing a spatial distribution ($O$, $O_k$) of radiation sources in the field of observation of a gamma camera (1) according to Claim 10, the method comprising the following steps:

- i) acquiring detection signals with the pixels ($12_i$) of the gamma camera during an acquisition period, each detection signal being associated with one detected interaction;
- ii) storing, in the memory, a number of detected interactions assigned to each pixel;

the method being **characterized in that** it comprises:

- iii) taking into account weights ($H(x, y)$) respectively assigned to each pixel, each weight being determined by implementing the method according to any one of claims 1 to 9, step a) being performed by exposing the gamma camera to a field of observation identical to or different from the field of observation to which the gamma camera is exposed in step i);
- iv) reconstructing the spatial distribution of the radiation sources, in the field of observation, on the basis of the interactions stored in step iii) and of the weights assigned to each pixel in step iii).

12. Method according to Claim 11, wherein:

- in step i), the field of observation is identical to the field of observation of the gamma camera in step a);
- step ii) and step b) are one and the same;
- step iii) and step c) are one and the same.

13. Method according to Claim 12, wherein:

- in step i), the field of observation is different from the field of observation of the gamma camera in step a);
- step iv) is implemented taking into account weights assigned to each pixel, the weights having been established in the course of an implementation of steps a) to f), prior or subsequent to step i).

**Fig. 1A**

**Fig. 1B**

**Fig. 2A**

**Fig. 2B**

**Fig. 2C**

**Fig. 2D**

**Fig. 2E**

**Fig. 3A**

**Fig. 3B**

**Fig. 4A**

**Fig. 4B**

**Fig. 4C**

Fig. 4D

Fig. 5A

**Fig. 5B**

**Fig. 5C**

**Fig. 6**

EP 4 361 684 B1

**Fig. 7A**

**Fig. 7B**

**Fig. 7C**

**Fig. 7D**

**Fig. 7E**

**Fig. 7F**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 9322937 B2

**Littérature non-brevet citée dans la description**

• **MONTEMONT et al.** Studying spatial resolution of CZT detectors using sub-pixel positioning for SPECT. *IEEE transactions on nuclear science*, October 2014, vol. 61